(19) Europäisches Patentamt European Patent Office Office européen des brevets

(11) **EP 2 430 309 B1**

(12) **EUROPEAN PATENT SPECIFICATION**

(45) Date of publication and mention of the grant of the patent:
**04.09.2013 Bulletin 2013/36**

(21) Application number: **09779396.2**

(22) Date of filing: **30.04.2009**

(51) Int Cl.:
*F04B 11/00* *(2006.01)*     *F04B 49/12* *(2006.01)*
*F16F 15/023* *(2006.01)*     *F16F 15/027* *(2006.01)*
*G01L 7/16* *(2006.01)*     *G01N 11/00* *(2006.01)*
*G01N 19/00* *(2006.01)*     *G01N 30/34* *(2006.01)*
*G01N 30/32* *(2006.01)*

(86) International application number:
**PCT/EP2009/055306**

(87) International publication number:
**WO 2010/124741 (04.11.2010 Gazette 2010/44)**

(54) **DETERMINING FLUID COMPRESSIBILITY WHILE DELIVERING FLUID**

BESTIMMUNG DER FLÜSSIGKEITSKOMPRIMIERBARKEIT BEI DER FLÜSSIGKEITSAUSGABE

DÉTERMINATION DE LA COMPRESSIBILITÉ D'UN FLUIDE PENDANT SA DISTRIBUTION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**21.03.2012 Bulletin 2012/12**

(73) Proprietor: **Agilent Technologies, Inc.**
**Santa Clara, California 95051 (US)**

(72) Inventors:
• **CHOIKHET, Konstantin**
**76337 Waldbronn (DE)**
• **HERZOG, Philip**
**76297 Stutensee (DE)**
• **WITT, Klaus**
**75210 Keltern (DE)**

(74) Representative: **Dilg, Haeusler, Schindelmann Patentanwaltsgesellschaft mbH**
**Leonrodstrasse 58**
**80636 München (DE)**

(56) References cited:
**EP-A- 0 309 596**     **WO-A-2006/087037**
**DE-B1- 2 737 062**     **US-A- 4 797 834**
**US-A- 5 635 631**

• **BILLEN J ET AL: "Influence of pressure and temperature on the physico-chemical properties of mobile phase mixtures commonly used in high-performance liquid chromatography" JOURNAL OF CHROMATOGRAPHY, ELSEVIER SCIENCE PUBLISHERS B.V, NL, vol. 1210, no. 1, 7 November 2008 (2008-11-07), pages 30-44, XP025535518 ISSN: 0021-9673 [retrieved on 2008-09-20]**

**Description**

BACKGROUND ART

The present invention relates to a method for determining a compressibility of a fluid in a system, and to a system for determining a compressibility of a fluid. Furthermore, the present invention relates to a fluid separation system for separating compounds of a sample fluid in a mobile phase.

U.S. Patent 4,797,207 discloses an apparatus and method for controlling a dual piston pump for a liquid chromatography system so as to pump a flow of solvent through the liquid chromatography column at a constant flow rate and with a solvent composition which is substantially equal to the desired solvent composition despite changing conditions of compressibility of the solvent. The control system uses a computer which measures the time it takes the pump shaft to move through an overlap region in the pump cycle when both pistons are simultaneously pumping as normalized to the time taken by the pump to move through a constant velocity portion of the piston travel defined by the user. This time is compared to the time stored in the computer for the particular flow rate used to measure the time defined above for the pump to move54 through the overlap region for an incompressible solvent at low pressure as normalized to the time taken by the input piston to move through the same user defined segment of the constant velocity portion of the travel of the input piston. The ratio of these two times is then used in an algorithm to derive a correction factor for compressibility. This correction factor is then used to control the flow rate and the makeup of the solvent composition to maintain the correct values over changing conditions of solvent compressibility.

DISCLOSURE

It is an object of the invention to provide an improved method for determining the compressibility of a fluid in a system. The object is solved by the independent claim(s). Further embodiments are shown by the dependent claim(s).

A method for determining compressibility of a fluid according to embodiments of the present invention comprises starting at a first value of pressure and compressing a first volume of the fluid to a first compressed volume at a second value of pressure, starting at the first value of pressure and compressing a second volume of the fluid to a second compressed volume at the second value of pressure, determining a first volumetric difference corresponding to a difference between the second volume and the first volume, determining a second volumetric difference corresponding to a difference between the second compressed volume and the first compressed volume, and determining a value of compressibility of the fluid from a ratio derived from the second volumetric difference and the first volumetric difference.

By using volume differences instead of the volumes themselves, it is possible to eliminate a variety of undesired volumetric effects that may impair the accuracy of the obtained results. For example, by determining a volume difference between a first and a second volume, any effects related to the dead volume of a respective fluidic device are eliminated. In a similar manner, any undesired offsets caused by specific features of a fluidic system cancel when determining volume differences. By using volume differences instead of the volumes themselves, the accuracy of the obtained compressibility value is improved.

According to embodiments of the present invention, both the compression of the first volume of the fluid and the compression of the second volume of the fluid start at a first value of pressure.

According to a preferred embodiment, compressibility of the fluid is determined in a fluidic system comprising a fluid chamber and a piston.

Further preferably, compressibility of the fluid is determined in a pump system comprising at least one reciprocating pump. IN this embodiment, the pump system may be used both for delivering a flow of fluid and for determining the fluid's compressibility.

According to a preferred embodiment, compressibility of the fluid is determined in a fluidic system comprising a primary reciprocating pump fluidically coupled with a secondary reciprocating pump that is located downstream of the primary reciprocating pump, the primary reciprocating pump being configured for conveying the fluid to the secondary reciprocating pump.

According to a preferred embodiment, the method comprises determining the first volumetric difference from a difference between a first piston stroke of the primary reciprocating pump and a second piston stroke of the primary reciprocating pump which is different from the first piston stroke, and determining the second volumetric difference from a difference between a third piston stroke of the secondary reciprocating pump and a fourth piston stroke of the secondary reciprocating pump, wherein the third piston stroke of the secondary reciprocating pump corresponds to the first piston stroke of the primary reciprocating pump, and wherein the fourth piston stroke of the secondary reciprocating pump corresponds to the second piston stroke of the primary reciprocating pump.

According to this embodiment, two different piston strokes of the primary reciprocating pump and two corresponding piston strokes of the secondary reciprocating pump are taken as a starting point for determining a first volumetric difference of the two different piston strokes of the primary reciprocating pump, and for determining a second volumetric difference of the two different piston strokes of the secondary reciprocating pump. Then, the first volumetric difference and the second volumetric difference are used for determining the value of compressibility of the fluid.

A major advantage of the method according to embodiments of the present invention is that it can be performed during regular operation of the system, just by determining two sets of corresponding piston strokes of the primary and the secondary reciprocating pump. It is not necessary to perform any specific measurements for determining the fluid's compressibility. By using the method according to the present invention, the value of compressibility of a fluid can be determined on the fly with high accuracy, even if the composition of the fluid is not known in advance. For determining the fluid's compressibility, no additional equipment is required, and therefore, the method is a cost-efficient method.

According to a preferred embodiment, the first piston stroke of the primary reciprocating pump is configured for supplying fluid to the secondary reciprocating pump, and the corresponding third piston stroke of the secondary reciprocating pump is configured for dispensing at least a portion of the fluid that has been supplied by the first piston stroke. Further preferably, the second piston stroke of the primary reciprocating pump is configured for supplying fluid to the secondary reciprocating pump, and the corresponding fourth piston stroke of the secondary reciprocating pump is configured for dispensing at least a portion of the fluid that has been supplied by the second piston stroke.

According to a preferred embodiment, the first piston stroke of the primary reciprocating pump is configured for supplying fluid to the secondary reciprocating pump, and the corresponding third piston stroke of the secondary reciprocating pump is configured for accommodating the fluid supplied by the first piston stroke without dispensing any fluid at its outlet. Further preferably, the second piston stroke of the primary reciprocating pump is configured for supplying fluid to the secondary reciprocating pump, and the corresponding fourth piston stroke of the secondary reciprocating pump is configured for accommodating the fluid supplied by the second piston stroke without dispensing any fluid at its outlet.

According to a preferred embodiment, the first piston stroke of the primary reciprocating pump and the third piston stroke of the secondary reciprocating pump are performed during a first operating cycle of the system. Further preferably, the second piston stroke of the primary reciprocating pump and the fourth piston stroke of the secondary reciprocating pump are performed during a further operating cycle of the system.

According to a preferred embodiment, at least some of stroke pairs of a first piston stroke of the primary reciprocating pump and the third piston stroke of the secondary reciprocating pump and stroke pairs of a second piston stroke of the primary reciprocating pump and a fourth piston stroke of the secondary reciprocating pump are cross-evaluated to derive the value of compressibility.

According to a preferred embodiment, the primary reciprocating pump is a piston pump, and the first piston stroke and the second piston stroke are derived from position-vs.-time curves of the primary reciprocating pump's piston. Further preferably, the secondary reciprocating pump is a piston pump, and the third piston stroke and the fourth piston stroke are derived from position-vs.-time curves of the secondary reciprocating pump's piston.

According to a preferred embodiment, the primary reciprocating pump is a piston pump, and the first piston stroke and the second piston stroke are derived from piston positions at predetermined points of time. Further preferably, the secondary reciprocating pump is a piston pump, and the third piston stroke and the fourth piston stroke are derived from piston positions at predetermined points of time.

According to a preferred embodiment, the primary reciprocating pump is a piston pump, and the first piston stroke and the second piston stroke are derived from piston position data acquired during a predetermined part of a pump cycle. Further preferably, the secondary reciprocating pump is a piston pump, and the third piston stroke and the fourth piston stroke are derived from piston position data acquired during a predetermined part of a pump cycle.

According to a preferred embodiment, the primary reciprocating pump is a piston pump, and the first piston stroke and the second piston stroke are derived from at least one of a maximum piston position and a minimum piston position during a predetermined part of a pump cycle. Further preferably, the secondary reciprocating pump is a piston pump, and the third piston stroke and the fourth piston stroke are derived from at least one of a maximum piston position and a minimum piston position during a predetermined part of a pump cycle.

According to a preferred embodiment, the fluid supplied by the primary reciprocating pump is partly used for filling up the secondary reciprocating pump and partly used for maintaining a flow of fluid at the secondary reciprocating pump's outlet.

According to a preferred embodiment, by determining the first volumetric difference, effects related to compression and decompression of a dead volume of the primary reciprocating pump are eliminated. In a preferred embodiment, by determining the second volumetric difference, effects related to compression and decompression of a dead volume of the secondary reciprocating pump are eliminated. Furthermore, according to a preferred embodiment, by determining the second volumetric difference, effects related to a flow of fluid dispensed by the secondary reciprocating pump are eliminated.

According to a preferred embodiment, the method comprises determining a compression ratio by dividing the second volumetric difference by the first volumetric difference. In a preferred embodiment, the method comprises determining a compression ratio by dividing the second volumetric difference by the first volumetric difference, and determining the value of compressibility of the fluid from the compression ratio. Furthermore, according to a preferred embodiment, the method comprises determining a compression ratio by dividing the second volumetric difference by the first volumetric difference, and determining the value of compressibility of the fluid from the compression ratio according to the formula: $\kappa$ = (1-compression ratio) / $p_{SYSTEM}$, with $\kappa$ denoting the compressibility of the fluid, and with $p_{SYSTEM}$ denoting a system pressure of the fluid.

According to a preferred embodiment, the primary reciprocating pump is configured for drawing in fluid at the first value of pressure, and for conveying the fluid to the secondary reciprocating pump. Further preferably, the primary reciprocating pump is configured for drawing in fluid at the first value of pressure, for compressing the fluid to the second value of pressure, and for supplying the fluid at the primary reciprocating pump's outlet at the second value of pressure.

According to a preferred embodiment, the first value of pressure is an atmospheric pressure. According to a preferred embodiment, the second value of pressure is a system pressure. Preferably, the system pressure is several hundreds or even thousands of bar.

According to a preferred embodiment, piston movements of the primary reciprocating pump and the secondary reciprocating pump are coordinated in time. According to a preferred embodiment, the primary reciprocating pump's piston substantially reciprocates out of phase relative to the secondary reciprocating pump's piston. Preferably, a delivery phase of the primary reciprocating pump substantially coincides with an intake phase of the secondary reciprocating pump.

According to a preferred embodiment, the value of compressibility of the fluid is determined during regular operation of the system. According to a preferred embodiment, the primary reciprocating pump and the secondary reciprocating pump are part of a common flow path. According to a preferred embodiment, the primary reciprocating pump and the secondary reciprocating pump are fluidically connected in series. Preferably, the primary reciprocating pump and the secondary reciprocating pump form a dual piston serial-type pump. Further preferably, the system is a fluid supply system configured for supplying a continuous flow of solvent.

A system according to embodiments of the present invention is configured for determining a compressibility of a fluid. The system comprises a fluidic system configured for compressing, starting at a first value of pressure, a first volume of the fluid to a first compressed volume at a second value of pressure, and for compressing, starting at the first value of pressure, a second volume of the fluid to a second compressed volume at the second value of pressure. The system further comprises a control unit configured for determining a first volumetric difference corresponding to a difference between the second volume and the first volume, for determining a second volumetric difference corresponding to a difference between the second compressed volume and the first compressed volume, and for determining a value of compressibility of the fluid from a ratio derived from the second volumetric difference and the first volumetric difference.

According to a preferred embodiment, the fluidic system comprises a primary reciprocating pump fluidically coupled with a secondary reciprocating pump that is located downstream of the primary reciprocating pump, the primary reciprocating pump being configured for conveying the fluid to the secondary reciprocating pump.

A fluid separation system according to embodiments of the present invention is configured for separating compounds of a sample fluid in a mobile phase, the fluid separation system comprising a mobile phase drive, preferably a pumping system, configured to drive the mobile phase through the fluid separation system, said mobile phase drive comprising a system as described above, and a separation unit, preferably a chromatographic column, configured for separating compounds of the sample fluid in the mobile phase.

According to a preferred embodiment, the fluid separation system further comprises at least one of: a sample injector configured to introduce the sample fluid into the mobile phase; a detector configured to detect separated compounds of the sample fluid; a collection unit configured to collect separated compounds of the sample fluid; a data processing unit configured to process data received from the fluid separation system; a degassing apparatus for degassing the mobile phase.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied for controlling operation of at least one of the reciprocating pumps. The software programs can also be part of the control software embodied within or onto a built-in controller of a pump.

BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).

Fig. 1 shows a measurement appliance for determining a compressibility of a fluid;

Fig. 2 shows how the measurement appliance shown in Fig. 1 can be used for determining a compressibility of a fluid;

Fig. 3 shows a dual piston serial-type pump comprising a primary piston pump that is fluidically connected in series with a secondary piston pump;

Fig. 4 depicts the piston positions of the primary piston pump and the secondary piston pump as a function of time;

Fig. 5 depicts the fluid contained in the primary piston pump for four different states of a pump cycle of the primary piston pump;

Fig. 6 shows the fluid contained in the secondary piston pump for two different states of a pump cycle of the secondary piston pump;

Fig. 7 shows position-vs.-time curves of the primary and the secondary piston pump both for a long stroke and a short stroke;

Fig. 8 illustrates how a quantity $\Delta$DECOMPRESSED representing a volume of fluid in the decompressed state is determined;

Fig. 9 illustrates how a quantity $\Delta$COMPRESSED representing the volume of fluid in the compressed state is determined;

Fig. 10 shows a sample separation system according to embodiments of the present invention;

Fig. 11 shows a chromatogram example acquired by the sample separation system of Fig. 10;

Fig. 12 shows a pump system before and after a long stroke is performed; and

Fig. 13 shows the pump system before and after a short stroke is performed.

## I. First Embodiment

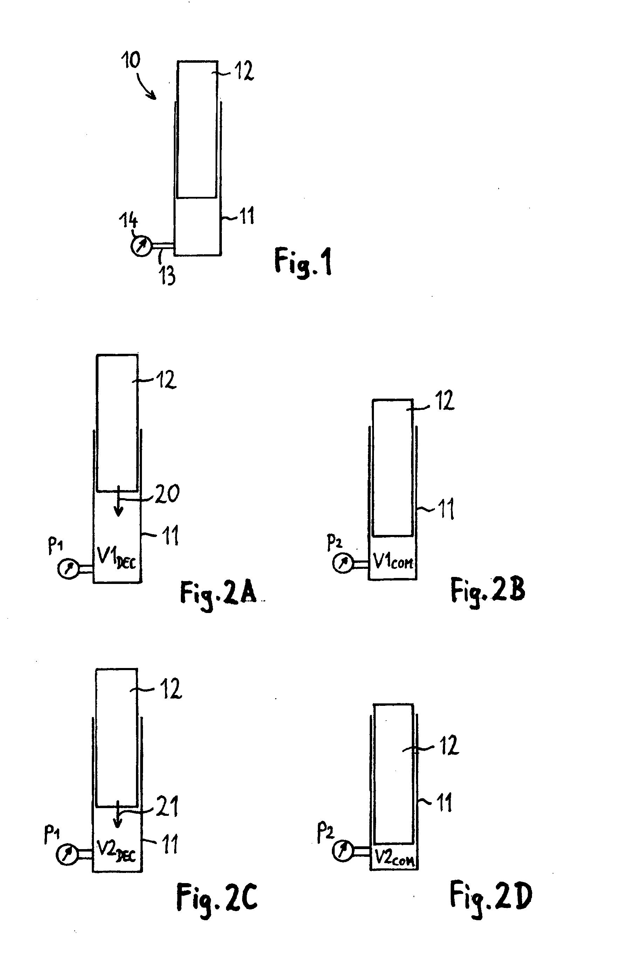

Fig. 1 shows a measurement appliance 10 that can be used for determining a compressibility of a fluid. The measurement appliance comprises a fluid chamber 11 with a movable piston 12. The fluid chamber 11 comprises a fluidic connector 13, and via the fluidic connector 13, the fluid chamber 11 is fluidically coupled with a pressure sensor 14.

For determining a compressibility of a fluid, two different volumes of fluid are successively loaded into the fluid chamber 11 and compressed from an initial pressure $p_1$ to an end pressure $p_2$. The information acquired is used for determining the fluid's compressibility.

The procedure for determining a fluid's compressibility is illustrated in Figs. 2A to 2D. First, as shown in Fig. 2A, a volume of fluid $V1_{DEC}$ at an initial pressure $p_1$ is contained in the fluid chamber 11. Next, the piston 12 performs a downward movement, as indicated by arrow 20, and the fluid contained in the fluid chamber 11 is compressed until a predefined pressure $p_2$ is reached. In the compressed state, which is shown in Fig. 2B, the volume of fluid in the fluid chamber 11 is equal to $V1_{COM}$.

Next, as shown in Fig. 2C, a different volume of fluid $V2_{DEC}$ is loaded into the fluid chamber 11. Again, the piston 12 performs a downward movement, as indicated by arrow 21. The fluid contained in the fluid chamber 11 is compressed until the predefined pressure $p_2$, or a pressure that is sufficiently close to $p_2$, is reached. In the compressed state, which is shown in Fig. 2D, the volume of fluid in the fluid chamber 11 is equal to $V2_{COM}$.

The difference between the volume $V1_{DEC}$ and the volume $V2_{DEC}$ at the initial pressure $p_1$ will be referred to as $\Delta$DECOMPRESSED:

$$\Delta\text{DECOMPRESSED} = V1_{DEC}-V2_{DEC}$$

Accordingly, the difference between the volume $V1_{COM}$ and the volume $V2_{COM}$ in the compressed state, at the pressure $p_2$, will be referred to as $\Delta$COMPRESSED:

$$\Delta\text{COMPRESSED} = V1_{COM}-V2_{COM}$$

The compression ratio of the fluid can be determined as a ratio of $\Delta$COMPRESSED and $\Delta$DECOMPRESSED as follows:

$$\text{compressio n ratio} = \frac{\Delta\text{COMPRESSED}}{\Delta\text{DECOMPRESS ED}} = \frac{V1_{COM} - V2_{COM}}{V1_{DEC} - V2_{DEC}}$$

Furthermore, $\Delta$DECOMPRESSED and $\Delta$COMPRESSED can be used for determining the fluid's compressibility. In general, a fluid's compressibility $\kappa$ is defined as

$$\kappa = \frac{1}{p_2 - p_1} \cdot \frac{\Delta V}{V},$$

with $\Delta V$ being a volumetric change experienced by a volume of fluid V when the volume V is brought from a pressure $p_1$ to a pressure $p_2$. The fluid's compressibility $\kappa$ can be expressed in terms of $\Delta$COMPRESSED and $\Delta$DE-COMPRESSED as follows:

$$\kappa = \frac{1}{p_2 - p_1} \cdot \left( \frac{\Delta DECOMPRESSED - \Delta COMPRESSED}{\Delta DECOMPRESSED} \right) =$$
$$= \frac{1}{p_2 - p_1} \cdot \left( 1 - \text{compression ratio} \right)$$

Hence, according to the first embodiment of the invention, by compressing two different volumes of fluid from a first pressure $p_1$ to a second pressure $p_2$ and evaluating respective volumetric differences, the fluid's compressibility may be determined.

## II. Second Embodiment

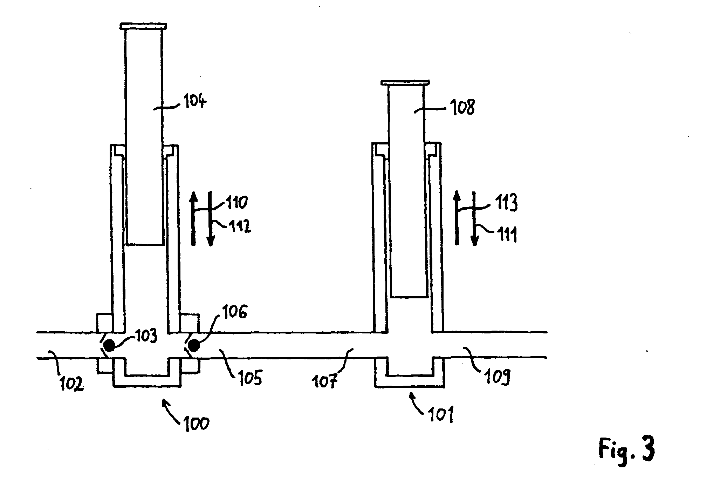

Fig. 3 shows a dual piston serial-type pump comprising a primary piston pump 100 that is fluidically connected in series with a secondary piston pump 101. The primary piston pump 100 comprises an inlet 102 with an inlet valve 103, a piston 104 that reciprocates in the primary piston pump 100, and an outlet 105 with an outlet valve 106. The outlet 105 is fluidically connected with an inlet 107 of the secondary piston pump 101. A piston 108 reciprocates in the secondary piston pump 101. The secondary piston pump 101 further comprises an outlet 109 for delivering a flow of fluid.

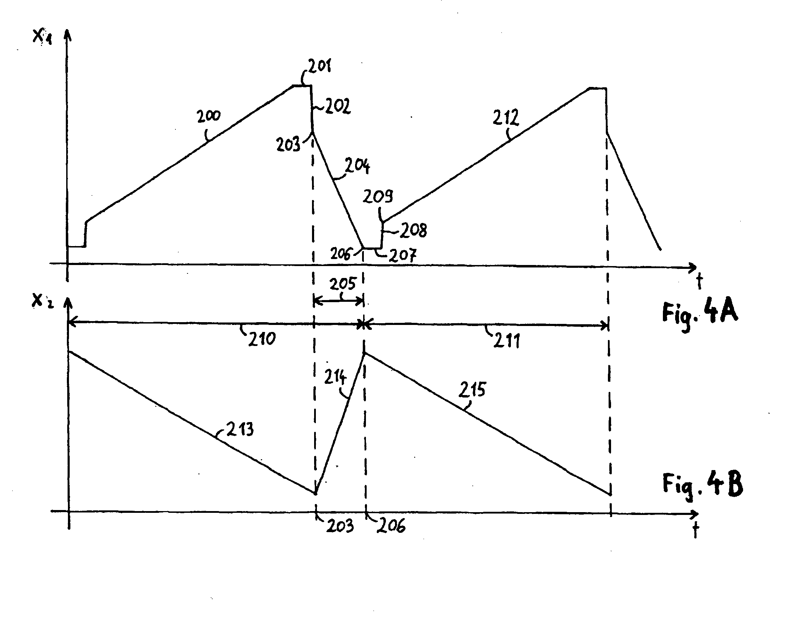

In Fig. 4A, the primary piston's position x1 is depicted as a function of time, and in Fig. 4B, right below Fig. 4A, the secondary piston's position x2 is shown as a function of time. During an intake phase 200 of the primary piston pump 100, the primary piston 104 performs an upward stroke, as indicated by arrow 110. The inlet valve 103 is opened, and fluid at atmospheric pressure is drawn into the primary piston pump 100.

During a time interval 201, the inlet valve 103 is closed. Then, to bring the fluid contained in the primary piston pump 100 to a system pressure of several hundred or even more than thousand bar, the primary piston 104 performs a compression phase 202 in the downward direction and compresses the volume of fluid contained in the primary piston pump 100. During the compression phase 202, both the inlet valve 103 and the outlet valve 106 are closed.

At a point of time 203, the fluid contained in the primary piston pump 100 is expected to have reached system pressure, and the outlet valve 106 should open. In a subsequent delivery phase 204, the primary piston 104 continues its downward movement, as indicated by arrow 112, and a flow of fluid is dispensed at the outlet 105 of the primary piston pump 100. The flow of fluid provided by the primary piston pump 100 is supplied to the secondary piston pump 101 and fills up the secondary piston pump's pump chamber during a deliver-and-fill phase 205. The deliver-and-fill phase 205 is defined as a phase during which a primary piston pump dispenses fluid, with said fluid being used, at least in part, for filling up the secondary piston pump's pump chamber.

During the deliver-and-fill phase 205, fluid may e.g. be supplied to the secondary piston pump 101 at a flow rate of about 5 to 20 ml/min. As a consequence of this large flow rate, the deliver-and-fill phase 205 can be quite short. In the example shown in Figs. 4A and 4B, the deliver-and-fill phase 205 only extends over a small portion of the pump cycle 210. For example, the deliver-and-fill phase may extend over less than 10% of the pump cycle.

At the point of time 206, the downward stroke of the primary piston 104 is finished, and during a time interval 207, the outlet valve 106 is closed. At the end of the primary piston's downward stroke, a certain dead volume of fluid remains in the pump chamber of the primary piston pump 100, said dead volume of fluid being at system pressure. To decompress this dead volume of fluid, the primary piston 104 performs a decompression movement 208 in the upward direction. At the point of time 209, the dead volume of fluid is approximately at atmospheric pressure, and the inlet valve 103 is opened. Now, the pump cycle 210 is finished, and a new pump cycle 211 starts. During an intake phase 212 of the primary piston pump 100, the primary piston 104 performs an upward stroke, as indicated by arrow 110, and fluid at atmospheric pressure is drawn into the primary piston pump 100.

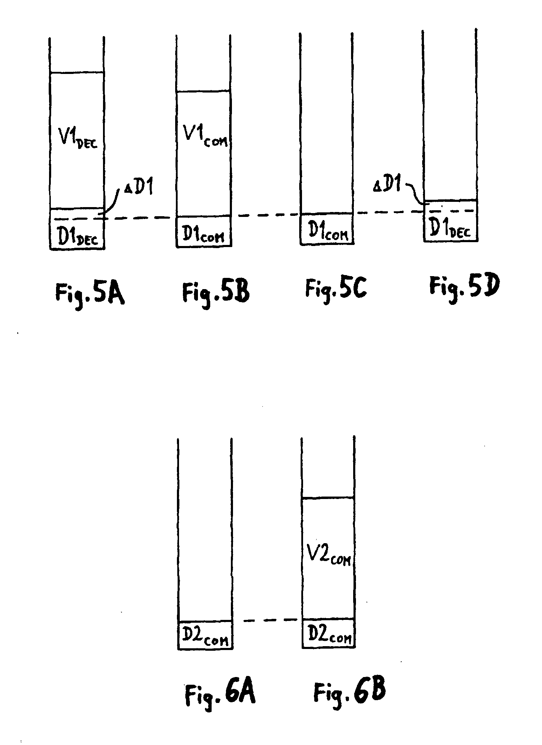

In Figs. 5A to 5D, the fluid contained in the primary piston pump is shown for four different states that occur during a pump cycle of the primary piston pump 100.

Fig. 5A shows the state of the primary piston pump 100 right after the primary piston 104 has drawn in fluid at atmospheric pressure. In Fig. 5A, the total volume of fluid contained in the primary piston chamber is at atmospheric pressure. The total volume of fluid is composed of a dead volume $D1_{DEC}$ in the decompressed state and a stroke volume $V1_{DEC}$ in the decompressed state.

During the compression phase 202 performed by the primary piston 104, the entire volume of fluid contained in the primary pump chamber is compressed from atmospheric pressure to a system pressure of several hundred or even more than thousand bar. In Fig. 5B, the state of the fluid contained in the primary piston chamber is shown after the compression phase 202 has been performed. During the compression phase 202, the dead volume $D1_{DEC}$ is compressed to a volume $D1_{COM}$, and the stroke volume $V1_{DEC}$ is compressed to a volume $V1_{COM}$. $\Delta D1$ denotes the volume difference between the dead volume $D1_{DEC}$ in the decompressed state and the dead volume $D1_{COM}$ in the compressed state.

Then, during the delivery phase 204, the compressed stroke volume $V1_{COM}$ is dispensed at the outlet 105 of the primary piston pump 100. Therefore, as shown in Fig. 5C, at the end of the delivery phase 204, only the compressed dead volume $D1_{COM}$ remains in the primary pump chamber. To bring the compressed dead volume $D1_{COM}$ back to atmospheric pressure, the primary piston 104 performs a decompression phase 208. During the decompression phase 208, the compressed dead volume $D1_{COM}$ is decompressed to a corresponding decompressed dead volume $D1_{DEC}$.

Fig. 4B shows the position $p_2$ of the secondary piston pump's piston as a function of time. During a delivery phase 213 of the secondary piston pump 101, the secondary piston 108 performs a downward movement, as indicated by arrow 111, and dispenses a continuous flow of fluid at the outlet 109 of the secondary piston pump 101.

Then, at the point of time 203, the outlet valve 106 is opened. During an intake phase 214 of the secondary piston pump 101, the secondary piston 108 performs an upward stroke, as indicated by arrow 113 and draws in fluid supplied by the primary piston pump 100. During the intake phase 214, the flow of fluid supplied by the primary piston pump 100 is partly used for filling up the fluid chamber of the secondary piston pump 101 and partly used for maintaining a continuous flow of fluid at the outlet 109. At the point of time 206, the primary piston has reached its lowest position and the pump chamber of the secondary piston pump 101 has taken in the fluid. Then, during a subsequent delivery phase 215, the secondary piston 108 performs a downward stroke, as indicated by arrow 111, and a flow of fluid is dispensed at the outlet 109.

In Figs. 6A and 6B, the fluid contained in the secondary piston pump is shown for two different states that occur during a pump cycle of the secondary piston pump 101. During the pump cycle, the fluid contained in the secondary piston pump 101 is always kept at system pressure.

Fig. 6A shows the state of the secondary piston pump 101 at the point of time 203, after the entire stroke volume contained in the secondary piston pump 101 has been dispensed. At the point of time 203, only a compressed dead volume $D2_{COM}$ remains in the secondary piston pump's pump chamber.

Fig. 6B shows the state of the secondary piston pump 101 at the point of time 206, after a compressed volume $V2_{COM}$ has been received from the primary piston pump 100 during the deliver-and-fill phase 205. At the point of time 206, the pump chamber of the secondary piston pump 101 contains both the compressed dead volume $D2_{COM}$ and the compressed volume $V2_{COM}$.

According to embodiments of the present invention, the respective piston positions $x_1$ and $x_2$ of the primary and the secondary piston, which are shown in Figs. 4A and 4B, are used for deriving compressibility of the fluid dispensed by the pumping system shown in Fig. 3. Thus, it becomes possible to track the compressibility of a fluid dispensed by a pump system during the pump system's regular operation, without performing a dedicated measurement for determining the fluid's compressibility.

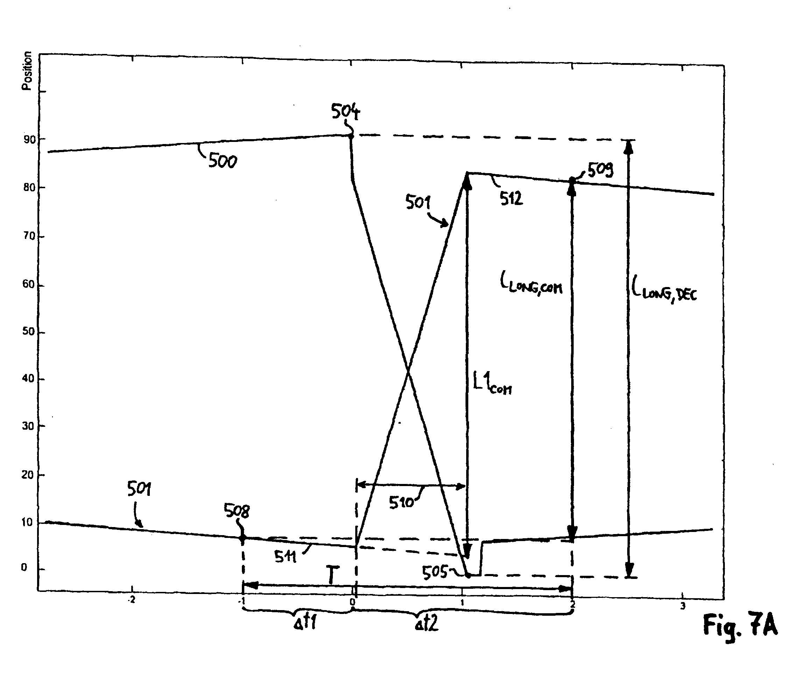

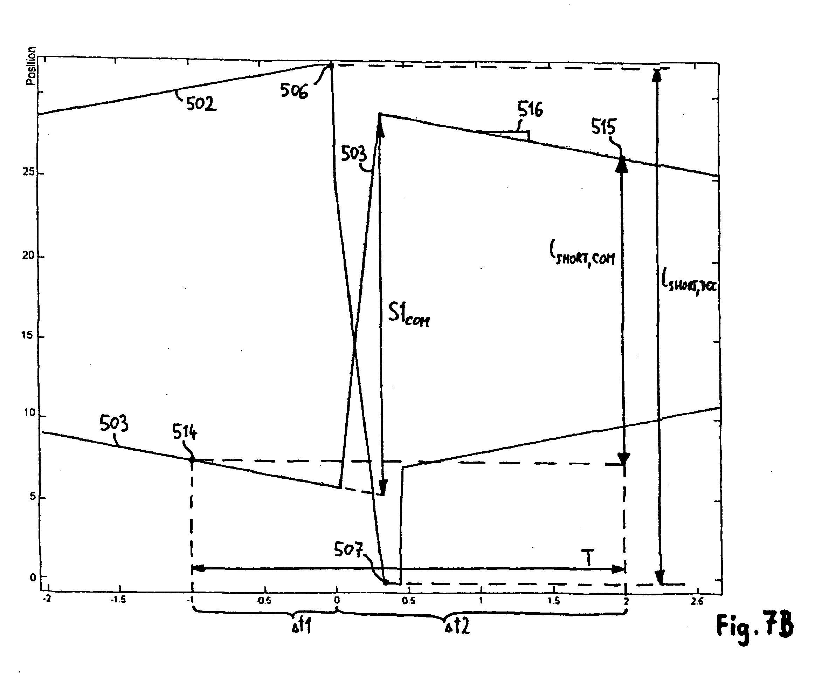

For determining the fluid's compressibility, the respective piston positions of the primary piston and the secondary piston are recorded for two different stroke lengths of the primary piston. The respective curves are shown in Figs. 7A and 7B. Fig. 7A shows a position-vs.-time curve 500 of the primary piston and a corresponding position-vs.-time curve 501 of the secondary piston for the case of the primary piston performing a long piston stroke during the deliver-and-fill phase 205. Fig. 7B shows a position-vs.-time curve 502 of the primary piston and a corresponding position-vs.-time curve 503 of the secondary piston for the case of the primary piston performing a short piston stroke during the deliver-and-fill phase 205.

Starting from these four curves, the fluid's compressibility is determined.

## 1. DETERMINING A QUANTITY ΔDECOMPRESSED REPRESENTING A VOLUME OF FLUID IN THE DECOMPRESSED STATE

First of all, a quantity ΔDECOMPRESSED is determined, said quantity representing a volume of fluid in the decompressed state.

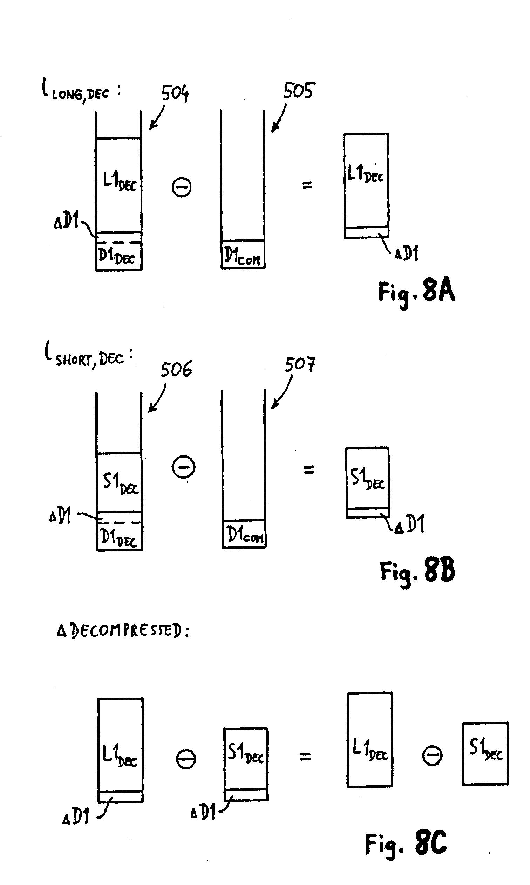

From the position-vs.-time curve 500 of the primary piston's long stroke, which is shown in Fig. 7A, a position difference $I_{LONG,DEC}$ is determined as a position difference between the uppermost point 504 and the lowermost point 505. In Fig. 8A, the meaning of this position difference $I_{LONG,DEC}$ is explained. At point 504, the primary piston pump is filled with fluid at atmospheric pressure, with the total volume of fluid being composed of a decompressed dead volume $D1_{DEC}$ and a decompressed stroke volume $L1_{DEC}$ that corresponds to the primary piston's long stroke. At the point 505, the primary piston pump only contains the compressed dead volume $D1_{COM}$. As shown in Fig. 8A, the volume difference between these two states amounts to $L1_{DEC} + D1_{DEC} - D1_{COM}$, and with $\Delta D1 = D1_{DEC} - D1_{COM}$, this volume difference is obtained as $L1_{DEC} + \Delta D1$. Hence, with regard to the primary piston's long stroke, the position difference $I_{LONG,DEC}$ shown in Fig. 8A corresponds to the volume $L1_{DEC} + \Delta D1$.

The position-vs.-time curve 502 shown in Fig. 7B is evaluated, which corresponds to the primary piston's short stroke. From the position-vs.-time curve 502, a position difference $I_{SHORT,DEC}$ is determined as a position difference between the uppermost point 506 and the lowermost point 507 of the position-vs.-time curve 502. The meaning of the position difference $I_{SHORT,DEC}$ is further explained in Fig. 8B. At point 506, the primary piston pump is filled with fluid at atmospheric pressure, whereby the total volume of fluid is composed of a decompressed dead volume $D1_{DEC}$ and a decompressed stroke volume $S1_{DEC}$ that corresponds to the primary piston's short stroke. In contrast, at the point 507, the primary piston pump only contains the compressed dead volume $D1_{COM}$. In Fig. 8B, it is shown that the volume difference between these two states amounts to $S1_{DEC} + D1_{DEC} - D1_{COM}$. With $\Delta D1 = D1_{DEC} - D1_{COM}$, this volume difference is equal to $S1_{DEC} + \Delta D1$. Hence, with regard to the primary piston's short stroke, the position difference $I_{SHORT,DEC}$ between the point 506 and the point 507 in Fig. 8B corresponds to the volume $S1_{DEC} + \Delta D1$.

Next, after the position differences $I_{LONG,DEC}$ and $I_{SHORT,DEC}$ have been derived, the above-mentioned quantity ΔDECOMPRESSED is determined as the difference between $I_{LONG,DEC}$ and $I_{SHORT,DEC}$:

$$\Delta DECOMPRESSED = I_{LONG,DEC} - I_{SHORT,DEC}$$

In Fig. 8C, it is graphically illustrated how the quantity ΔDECOMPRESSED is determined. The position difference $I_{LONG,DEC}$ corresponds to $L1_{DEC} + \Delta D1$, and $I_{SHORT,DEC}$ corresponds to $S1_{DEC} + \Delta D1$. $\Delta D1$ denotes the volume difference between the expanded state and the compressed state of the primary piston pump's dead volume, which is not known. However, by subtracting $I_{SHORT,DEC}$ from $I_{LONG,DEC}$, $\Delta D1$ is eliminated. The resulting quantity ΔDECOMPRESSED corresponds to $L1_{DEC} - S1_{DEC}$ and does not depend on $\Delta D1$. Hence, the resulting quantity ΔDECOMPRESSED represents a volume of fluid in the decompressed state, which does not depend on any particular features of the primary piston pump.

## 2. DETERMINING A QUANTITY ΔCOMPRESSED REPRESENTING THE VOLUME OF FLUID IN THE COMPRESSED STATE

For determining a corresponding volume of fluid in the compressed state, the respective position-vs.-time curves 501 and 503 of the secondary piston, which are shown in Figs. 7A and 7B, are analysed. Curve 501 corresponds to the case of a long piston stroke of the secondary piston, whereas curve 503 corresponds to the case of a short piston stroke of the secondary piston.

For obtaining a measure of the stroke of the secondary piston, the position of the secondary piston is recorded at a point 508, before the delivery-and-fill phase begins, and at a point 509, after the deliver-and-fill phase is finished. The time interval $\Delta t1$ denotes a predefined time interval between the point 508 and the starting point of the deliver-and-fill phase, and $\Delta t2$ denotes a fixed time interval between the start of the deliver-and-fill phase and the point 509. As indicated in Fig. 7A, a position difference $(_{LONG,COM}$ is determined as a difference between the secondary piston's respective positions at point 509 and point 508.

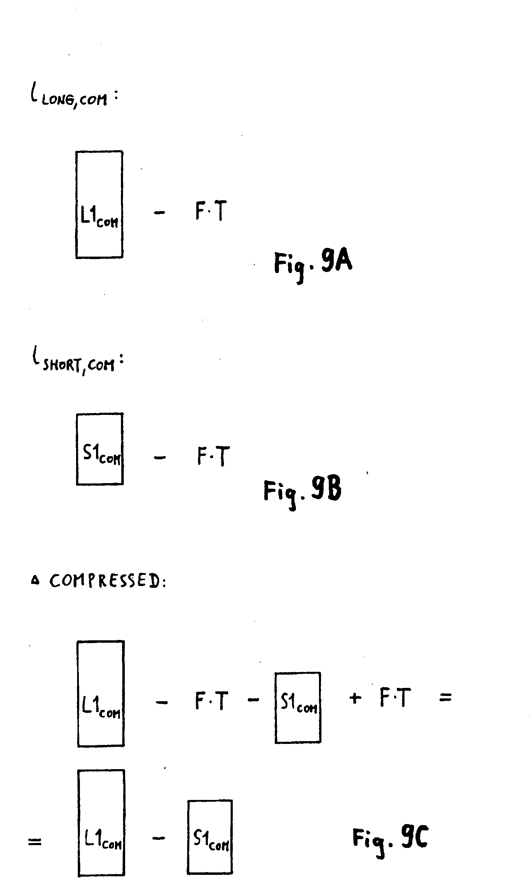

In Fig. 9A, the meaning of the position difference $I_{LONG,COM}$ is further illustrated. During the deliver-and-fill phase 510 shown in Fig. 7A, the primary piston pump supplies a stroke volume $L1_{COM}$ in the compressed state to the secondary piston pump. Besides that, in the regions 511 and 512, the secondary piston performs a continuous downward movement to dispense a steady flow of fluid at the secondary piston pump's outlet. In this regard, the slope 513 of the secondary piston's movement determines the flow rate at which the fluid is dispensed. Also during the deliver-and-fill phase 510, a continuous flow of fluid is maintained at the secondary piston pump's outlet. Therefore, the total stroke volume $L1_{COM}$ received from the primary piston pump is partly used for maintaining the flow of fluid at the secondary piston pump's outlet, and is partly used for filling up the secondary piston pump's pump chamber.

Hence, as illustrated in Fig. 9A, the position difference $I_{LONG,COM}$ depends both on the stroke volume $L1_{COM}$ supplied by the primary piston pump and on the volume F·T of fluid dispensed at the secondary piston pump's outlet during the time interval T = $\Delta t1 + \Delta t2$, with F denoting the flow rate of the dispensed fluid. Hence, the position difference $I_{LONG,COM}$ shown in Fig. 7A corresponds to the volume $L1_{COM}$ - F·T.

Next, the secondary piston's movement is analysed for the case of a short piston stroke, which is shown in Fig. 7B. From the position-vs.-time curve 503, a position difference $I_{SHORT,COM}$ is determined as a difference between the respective piston positions at point 515 and at point 514. Point 514 corresponds to a point of time before the deliver-and-fill phase starts, and point 515 corresponds to a point of time after the deliver-and-fill phase has been performed, with $\Delta t1$ denoting the time interval between the point 514 and the start of the deliver-and-fill phase, and with $\Delta t2$ denoting the time interval between the start of the deliver-and-fill phase and the point 515.

From Fig. 7B, it can be seen that the position difference $I_{SHORT,COM}$ depends both on the stroke volume $S1_{COM}$ supplied by the primary piston pump, and on the fluid dispensed at the secondary piston pump's outlet during the time interval T= $\Delta t1 + \Delta t2$. The flow rate at the secondary piston pump's outlet is determined by the slope 516 of the position-vs.-time curve 503. In a preferred embodiment, the system pressure and the flow resistance (restriction) in the system for the case of the short stroke shown in Fig. 7B are essentially equal or close to those in the case of a long stroke as shown in Fig. 7A, and in this case, the flow rate of the fluid at the secondary piston pump's outlet in Fig. 7B is equal to F. Hence, as illustrated in Fig. 9B, the position difference $I_{SHORT,COM}$ corresponds to the volume $S1_{COM}$ - F·T, with $S1_{COM}$ denoting the stroke volume obtained from the primary piston pump in case of a short stroke, with F denoting the flow rate at the outlet, and with T denoting the time interval between the points 514 and 515.

Now, both the position difference $I_{LONG,COM}$ and the position difference $I_{SHORT,COM}$ are known. Next, the quantity $\Delta$COMPRESSED is determined as the difference between $I_{LONG,COM}$ and $I_{SHORT,COM}$. In particular, as shown in Fig. 9C, the quantity $\Delta$COMPRESSED corresponds to

$$\Delta COMPRESSED: \quad L1_{COM} - F \cdot T - S1_{COM} + F \cdot T = L1_{COM} - S1_{COM}$$

The volumetric contributions that are due to the flow rate cancel each other, and hence, the quantity $\Delta$COMPRESSED corresponds to the volume L1 - S1 in the compressed state.

Further embodiments of the measuring algorithm may include evaluation of the F·T member (or of the integral F·dT) for each of the strokes based on the expected, projected or otherwise evaluated flow value, so that compressibility evaluation is possible at different flow rates under the similar system pressure and/or for non-equal T-intervals.

3. DERIVING THE FLUID'S COMPRESSIBILITY FROM $\Delta$DECOMPRESSED AND $\Delta$COMPRESSED

From Figs. 8C and 9C, it can be seen that $\Delta$DECOMPRESSED corresponds to $L1_{DEC}$ - $S1_{DEC}$, whereas $\Delta$COMPRESSED corresponds to $L1_{COM}$ - $S1_{COM}$. Hence, $\Delta$DECOMPRESSED corresponds to the volume L1-S1 at atmospheric pressure, whereas $\Delta$COMPRESSED corresponds to the same volume L1-S1 at a system pressure of several hundred or even more than thousand bar.

The compression ratio of the fluid can be determined as a ratio of $\Delta$COMPRESSED and $\Delta$DECOMPRESSED as follows:

$$\text{compression ratio} = \frac{\Delta COMPRESSED}{\Delta DECOMPRESSED} = \frac{I_{LONG,COM} - I_{SHORT,COM}}{I_{LONG,DEC} - I_{SHORT,DEC}}$$

Furthermore, $\Delta$DECOMPRESSED and $\Delta$COMPRESSED can be used for determining the fluid's compressibility. In general, a fluid's compressibility $\kappa$ is defined as

$$\kappa = \frac{1}{p_{SYSTEM}} \cdot \frac{\Delta V}{V},$$

with $p_{SYSTEM}$ denoting the system pressure, and with $\Delta V$ being a volumetric change experienced by a volume of fluid V when the volume V is brought from atmospheric pressure to system pressure. According to embodiments of the present invention, the fluid's compressibility $\kappa$ can be expressed in terms of $\Delta COMPRESSED$ and $\Delta DECOMPRESSED$ as follows:

$$\kappa = \frac{1}{p_{SYSTEM}} \cdot \left( \frac{\Delta DECOMPRESSED - \Delta COMPRESSED}{\Delta DECOMPRESSED} \right) =$$
$$= \frac{1}{p_{SYSTEM}} \cdot (1 - \text{compression ratio})$$

It is also possible to determine compressibility of the fluid in the case that in contrast to the embodiments shown in Figs. 8A to 8C and 9A to 9C, the end position of the primary piston for the short stroke is not the same as the end position of the primary piston for the long stroke.

Hence, the compressibility can be determined by recording position-vs.-time curves of the primary and secondary piston for at least two different stroke lengths. The system pressure $p_{SYSTEM}$ may either be known in advance, or it may be determined by a pressure detection unit.

According to embodiments of the present invention, a fluid's compressibility may be determined during the regular operation of a pump system without requiring any dedicated measurements.

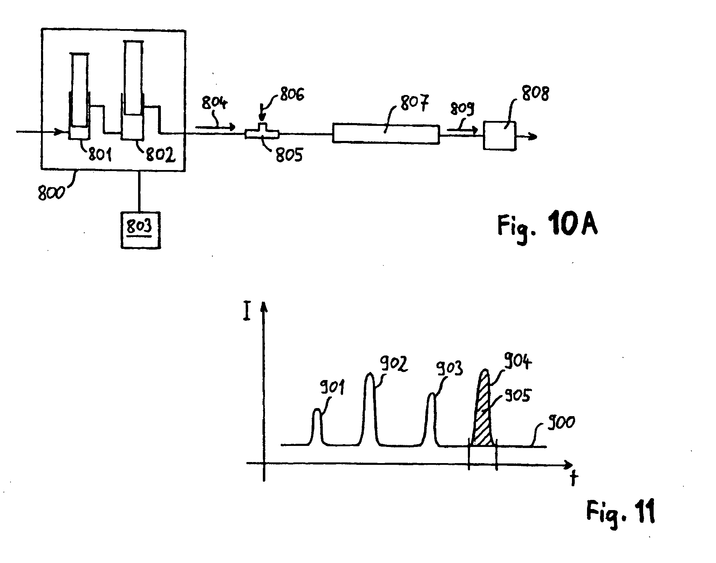

The method for determining a fluid's compressibility may for example be employed in a separation system adapted for separating compounds of a given sample. Fig. 10A shows a separation system according to embodiments of the present invention. The separation system may e.g. be a liquid chromatography system, an electrophoresis system or an electrochromatography system.

The separation system shown in Fig. 10A comprises a pump unit 800 with a primary piston pump 801 and a secondary piston pump 802. The primary piston pump 801 and the secondary piston pump 802 are fluidically connected in series and form a dual piston serial-type pump. The respective piston movements of the primary piston pump 801 and the secondary piston pump 802 are controlled by a control unit 803. The pump unit 800 is adapted for supplying a flow of solvent 804 at system pressure to a sample injection unit 805. There, a volume 806 of fluid sample may be introduced into the separation flow path. Both solvent and fluid sample are conveyed through a separation device 807, and while passing through the separation device 807, the sample's various compounds are separated. The outlet of the separation device 807 is fluidically coupled with a detection unit 808, and there, the arrival of the sample's various compounds is detected as a function of time.

Additionally, a proportioning mixing appliance can e.g. be included into the fluid path prior to the pump unit 800 so that measurements of different fluids and their mixtures are possible in a highly automated manner.

Further temperature sensing and/or temperature controlling appliances or devices can be situated in the proximity or immediately on the pump cylinders or they can be incorporated into the pump cylinders in order to perform measurements at different temperatures or to take corrections related to the temperature on the measured data or on the derived compressibility values.

According to embodiments of the present invention, the control unit 803 may record position-vs.-time curves of the primary piston pump 801 and the secondary piston pump 802 for at least two different stroke volumes. Then, these position-vs.-time curves may be used as a starting point for determining the compressibility of the fluid dispensed at the outlet of the pump unit 800. In particular, in case the fluid's composition varies as a function of time, the fluid's compressibility can be monitored during regular operation of the separation system. According to embodiments of the present invention, the fluid's compressibility can be determined on the fly, without interruption of normal operation of the fluid delivery system.

In the separation system shown in Fig. 10A, the determined compressibility $\kappa$ of the fluid may for example be used for relating the flow of fluid 804 dispensed at system pressure to a corresponding flow 809 at the outlet of the separation device 807. At the outlet of the separation device 807, the fluid's pressure is considerably smaller than the system pressure $p_{SYSTEM}$. For this reason, the fluid expands when passing through the separation device 807. With the

fluid's compressibility $\kappa$ being known, the flow of fluid 804 can be translated into a corresponding flow of fluid 809 that is supplied to the detection unit 808.

According to embodiments of the present invention, the method for determining a compressibility of a fluid may also be employed in a multi-channel fluid delivery system. In a multi-channel fluid delivery system, it is possible to determine compressibility for each channel independently, even if the outlets of the channels are fluidically connected, and during multi-channel operation, i.e. when each of the fluid delivery channels delivers a certain flow of its respective fluid.

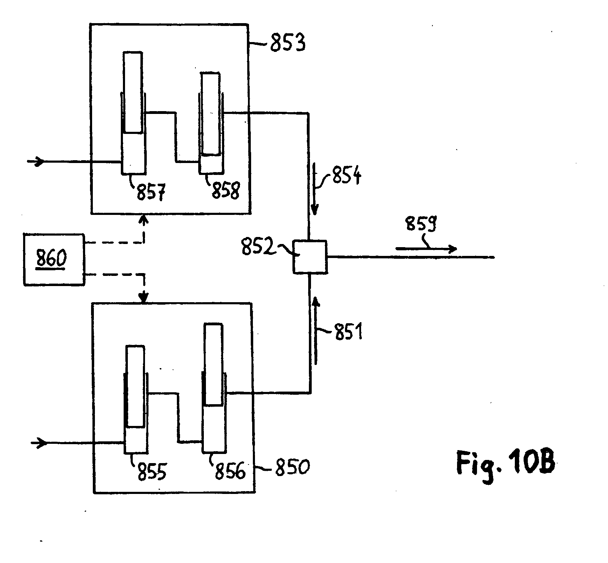

Fig. 10B shows a multi-channel fluid delivery system comprising a first pump unit 850 for delivering a flow 851 of first fluid to a mixing tee 852, and a second pump unit 853 for delivering a flow 854 of second fluid to the mixing tee 852. Both the first pump unit 850 and the second pump unit 853 are implemented as dual piston serial type pumps. The first pump unit 850 comprises a primary piston pump 855 fluidically connected with a secondary piston pump 856, and the second pump unit 853 also comprises a primary piston pump 857 fluidically connected with a secondary piston pump 858. At the mixing tee 852, the flow 851 of first fluid is mixed with the flow 854 of second fluid, and a flow 859 of composite solvent is supplied to a fluidic system located downstream of the multi-channel fluid delivery system.

Operation of the multi-channel fluid delivery system may e.g. be controlled by a control unit 860. The control unit 860 may e.g. evaluate position-vs.-time curves of the first pump unit's primary piston pump 855 and secondary piston pump 856 to determine a compressibility $\kappa 1$ of the first fluid. Furthermore, the control unit 860 may evaluate position-vs.-time curves of the second pump unit's primary pump unit 857 and secondary piston pump 858 to determine a compressibility $\kappa 2$ of the second fluid, which may be completely different from the compressibility $\kappa 1$ of the first fluid. Though the outlet of the first pump unit 850 is fluidically connected via the mixing tee 852 with the outlet of the second pump unit 853, the respective compressibilities $\kappa 1$ and $\kappa 2$ of the first and the second fluid can be determined independently of one another.

In Fig. 11, signal intensity I is shown as a function of time for a chromatogram 900 acquired by the detection unit 808. The chromatogram 900 comprises a plurality of peaks 901, 902, 903, 904, with each peak being related to a specific sample compound. In case the flow of fluid 809 is substantially constant or accurately known, the concentration of a sample compound can be determined by calculating the area below the corresponding peak. For example, the area 905 below the peak 904 indicates the concentration of the corresponding sample compound. Hence, for determining areas that indicate respective concentrations of the sample compounds with high accuracy, it is desirable to keep the flow of fluid 809 at the detection unit 808 as constant as possible.

According to embodiments of the present invention, the fluid's compressibility may be monitored during operation of the pump unit 800. Then, the flow 804 may be controlled such that the flow 809 at the detection unit 808 is substantially kept constant. Alternatively, the compressibility determined at the pump unit 800 may be used for analytically correcting the chromatograms acquired by the detection unit 808. In any case, by monitoring the fluid's compressibility during regular operation, accuracy and reliability of the acquired chromatograms is substantially improved.

## III. Third Embodiment

Also in the third embodiment, a dual-piston serial type pump is employed for determining compressibility of a fluid, with the dual-piston serial type pump comprising a primary piston pump fluidically connected with a secondary piston pump.

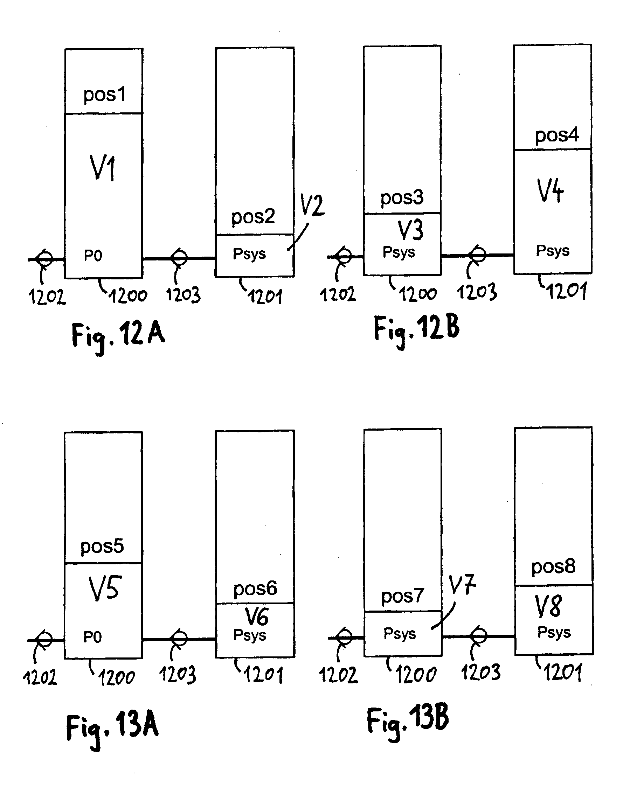

First, both the primary piston pump and the secondary piston pump perform a long piston stroke during a deliver-and-fill phase,, which is illustrated in Figs. 12A and 12B. Fig. 12A shows a primary piston pump 1200 and the secondary piston pump 1201 at a point of time before the compression and the delivery-and-fill phase start. The piston of the primary piston pump 1200 is in its uppermost position, which is indicated as "pos1", and the volume V1 is at an initial pressure P0. The piston of the secondary piston pump 1201 is at its lowest position, which is indicated as "pos2", and the secondary piston pump 1201 contains a small volume V2 of compressed fluid at system pressure Psys. Initially, both the inlet valve 1202 and the outlet valve 1203 are closed.

Now, the piston of the primary piston pump 1200 starts moving downward and compresses the volume of fluid V1 to system pressure. Then, the outlet valve 1203 opens, and the primary piston pump 1200 supplies fluid at system pressure to the secondary piston pump 1201.

Fig. 12B shows both the primary piston pump 1200 and the secondary piston pump 1201 at a point of time after the delivery-and-fill phase has been performed. The piston of the primary piston pump 1200 is at a position "pos3", and the primary piston pump 1200 contains a volume of fluid V3 at system pressure Psys. The piston of the secondary piston pump 1201 has performed an upward stroke and is at a position "pos4". After the delivery-and-fill phase, the secondary piston pump 1201 contains a volume of fluid V4 at system pressure Psys.

Next, the total volume contained in the pump system is analyzed both before and after the long stroke is performed. Before the delivery-and-fill phase, the pump system contains a volume V1 at an initial pressure P0 and a volume V2 at a system pressure Psys. After the delivery-and-fill phase, the pump system contains a volume V3 at system pressure Psys and a volume V4 at system pressure Psys. Hence, it can be concluded that during the long piston stroke, the volume V1 at the initial pressure P0 is converted into a corresponding compressed volume (V3+V4-V2) at system pressure Psys, because the volume (V3+V4-V2) represents the increase of the volume of compressed fluid during the long piston stroke. Hence, the volume V1 of non-compressed fluid at the initial pressure P0 corresponds to the volume (V3+V4-V2) of compressed fluid at system pressure Psys.

Next, as illustrated in Figs. 13A and 13B, both the primary piston pump 1200 and the secondary piston pump 1201 perform a small piston stroke during a deliver-and-fill phase. Fig. 13A depicts both the primary piston pump 1200 and the secondary piston pump 1201 before the deliver-and-fill phase. The piston of the primary piston pump 1200 is at the position "pos5", and the primary piston pump 1200 contains a non-compressed volume of fluid V5. The piston of the secondary piston pump 1201 is at its position "pos6", and the secondary piston pump 1201 contains a compressed volume of fluid V6 at system pressure Psys.

Next, the piston of the primary piston pump 1200 starts moving downwards, compresses the volume of fluid V5. Then, the outlet valve 1203 opens, and during the delivery-and-fill phase, the primary piston pump 1200 supplies a flow of fluid to the secondary piston pump 1201. Fig. 13B shows both the primary piston pump 1200 and the secondary piston pump 1201 after the deliver-and-fill phase. After the short stroke has been performed, the piston of the primary piston pump 1200 is at the position "pos7", and the primary piston pump 1200 contains a compressed volume of fluid V7 at system pressure Psys. The piston of the secondary piston pump 1201 is at a position "pos8", and the secondary piston pump 1201 contains a volume of fluid V8 at system pressure Psys.

Before the short piston stroke is performed, the pump system contains a volume V5 at an initial pressure P0 and a volume V6 at a system pressure Psys. After the short piston stroke has been performed, the pump system contains a volume V7 at system pressure Psys and a volume V8 at system pressure Psys. Hence, during the short piston stroke, the volume V5 at the initial pressure P0 is converted into a corresponding compressed volume (V7+V8-V6) at system pressure Psys, because the volume (V7+V8-V6) represents the increase of the volume of compressed fluid during the short piston stroke. Hence, the volume V5 of non-compressed fluid at the initial pressure P0 corresponds to the volume (V7+V8-V6) of compressed fluid at system pressure Psys.

From the position data acquired during the long piston stroke shown in Figs. 12A and 12B and the short piston stroke shown in Figs. 13A and 13B, a quantity ΔDECOMPRESSED is determined, which represents the volumetric difference between the non-compressed initial volume V1 of the long piston stroke and the non-compressed volume V5 for the short piston stroke:

$$\Delta DECOMPRESSED = (V1-V5)$$

Furthermore, the quantity ΔCOMPRESSED is determined, which represents the volumetic difference between the compressed volume (V3+V4-V2) that corresponds to the non-compressed volume V1, and the compressed volume (V7-V8-V6), which corresponds to the non-compressed volume V5:

$$\Delta COMPRESSED = (V3+V4-V2) - (V7+V8-V6)$$

As soon as ΔDECOMPRESSED and ΔCOMPRESSED are known, the compression ratio can be determined as follows:

$$\text{compression ratio} = \frac{\Delta COMPRESSED}{\Delta DECOMPRESSED} = \frac{(V3+V4-V2)-(V7+V8-V6)}{(V1-V5)}$$

The compression ratio may also be expressed in terms of the piston positions "pos1", "pos2", etc.:

$$\text{compression ratio} = \frac{\Delta COMPRESSED}{\Delta DECOMPRESSED} = \frac{(pos3+pos4-pos2)-(pos7+pos8-pos6)}{(pos1-pos5)}$$

Accordingly, the compressibility κ of the fluid can be obtained as:

$$\kappa = \frac{1}{p_{SYSTEM}} \cdot \left( \frac{\Delta DECOMPRESSED - \Delta COMPRESSED}{\Delta DECOMPRESSED} \right) =$$
$$= \frac{1}{p_{SYSTEM}} \cdot \left( \frac{(V1 - V5) - (V3 + V4 - V2) + (V7 + V8 - V6)}{(V1 - V5)} \right)$$

## Claims

1. A method for determining compressibility of a fluid, comprising
   starting at a first value of pressure and compressing a first volume of the fluid to a first compressed volume at a second value of pressure;
   starting at the first value of pressure and compressing a second volume of the fluid to a second compressed volume at the second value of pressure;
   determining a first volumetric difference corresponding to a difference between the second volume and the first volume;
   determining a second volumetric difference corresponding to a difference between the second compressed volume and the first compressed volume;
   determining a value of compressibility of the fluid from a ratio derived from the second volumetric difference and the first volumetric difference.

2. The method of claim 1,
   wherein compressibility of the fluid is determined in a fluidic system comprising a fluid chamber and a piston, or wherein compressibility of the fluid is determined in a pump system comprising at least one reciprocating pump.

3. The method of claim 1,
   wherein compressibility of the fluid is determined in a fluidic system comprising a primary reciprocating pump fluidically coupled with a secondary reciprocating pump that is located downstream of the primary reciprocating pump, the primary reciprocating pump being configured for conveying the fluid to the secondary reciprocating pump.

4. The method of the preceding claim, the method comprising
   determining the first volumetric difference from a difference between a first piston stroke of the primary reciprocating pump and a second piston stroke of the primary reciprocating pump which is different from the first piston stroke;
   determining the second volumetric difference from a difference between a third piston stroke of the secondary reciprocating pump and a fourth piston stroke of the secondary reciprocating pump;
   wherein the third piston stroke of the secondary reciprocating pump corresponds to the first piston stroke of the primary reciprocating pump, and wherein the fourth piston stroke of the secondary reciprocating pump corresponds to the second piston stroke of the primary reciprocating pump.

5. The method of the preceding claim, further comprising at least one of:

   the first piston stroke of the primary reciprocating pump is configured for supplying fluid to the secondary reciprocating pump, and the corresponding third piston stroke of the secondary reciprocating pump is configured for dispensing at least a portion of the fluid that has been supplied by the first piston stroke;
   the second piston stroke of the primary reciprocating pump is configured for supplying fluid to the secondary reciprocating pump, and the corresponding fourth piston stroke of the secondary reciprocating pump is configured for dispensing at least a portion of the fluid that has been supplied by the second piston stroke;
   the first piston stroke of the primary reciprocating pump is configured for supplying fluid to the secondary reciprocating pump, and the corresponding third piston stroke of the secondary reciprocating pump is configured for accommodating the fluid supplied by the first piston stroke without dispensing any fluid at its outlet;
   the second piston stroke of the primary reciprocating pump is configured for supplying fluid to the secondary reciprocating pump, and the corresponding fourth piston stroke of the secondary reciprocating pump is configured for accommodating the fluid supplied by the second piston stroke without dispensing any fluid at its outlet;

the first piston stroke of the primary reciprocating pump is configured for filling up the secondary reciprocating pump during a deliver-and-fill phase, and the corresponding third piston stroke of the secondary reciprocating pump is configured for dispensing at least a portion of the fluid that has been supplied by the first piston stroke;

the second piston stroke of the primary reciprocating pump is configured for filling up the secondary reciprocating pump during a deliver-and-fill phase, and the corresponding fourth piston stroke of the secondary reciprocating pump is configured for dispensing at least a portion of the fluid that has been supplied by the second piston stroke;

the first piston stroke of the primary reciprocating pump is configured for filling up the secondary reciprocating pump during a deliver-and-fill phase, and the corresponding third piston stroke of the secondary reciprocating pump is configured for accommodating the fluid supplied by the first piston stroke without dispensing any fluid at its outlet;

the second piston stroke of the primary reciprocating pump is configured for filling up the secondary reciprocating pump during a deliver-and-fill phase, and the corresponding fourth piston stroke of the secondary reciprocating pump is configured for accommodating the fluid supplied by the second piston stroke without dispensing any fluid at its outlet;

the first piston stroke of the primary reciprocating pump and the third piston stroke of the secondary reciprocating pump are performed during a first operating cycle of the system;

the second piston stroke of the primary reciprocating pump and the fourth piston stroke of the secondary reciprocating pump are performed during a further operating cycle of the system;

at least some of stroke pairs of a first piston stroke of the primary reciprocating pump and the third piston stroke of the secondary reciprocating pump and stroke pairs of a second piston stroke of the primary reciprocating pump and a fourth piston stroke of the secondary reciprocating pump are cross-evaluated to derive the value of compressibility.

6. The method of any one of claims 4-5, further comprising at least one of:

the primary reciprocating pump is a piston pump, and the first piston stroke and the second piston stroke are derived from position-vs.-time curves of the primary reciprocating pump's piston;

the secondary reciprocating pump is a piston pump, and the third piston stroke and the fourth piston stroke are derived from position-vs.-time curves of the secondary reciprocating pump's piston;

the primary reciprocating pump is a piston pump, and the first piston stroke and the second piston stroke are derived from piston positions at predetermined points of time;

the secondary reciprocating pump is a piston pump, and the third piston stroke and the fourth piston stroke are derived from piston positions at predetermined points of time;

the primary reciprocating pump is a piston pump, and the first piston stroke and the second piston stroke are derived from piston position data acquired during a predetermined part of a pump cycle;

the secondary reciprocating pump is a piston pump, and the third piston stroke and the fourth piston stroke are derived from piston position data acquired during a predetermined part of a pump cycle;

the primary reciprocating pump is a piston pump, and the first piston stroke and the second piston stroke are derived from at least one of a maximum piston position and a minimum piston position during a predetermined part of a pump cycle;

the secondary reciprocating pump is a piston pump, and the third piston stroke and the fourth piston stroke are derived from at least one of a maximum piston position and a minimum piston position during a predetermined part of a pump cycle.

7. The method of any one of claims 3-6, wherein the fluid supplied by the primary reciprocating pump is partly used for filling up the secondary reciprocating pump and partly used for maintaining a flow of fluid at the secondary reciprocating pump's outlet.

8. The method of any one of claims 3-7, further comprising at least one of:

by determining the first volumetric difference, effects related to compression and decompression of a dead volume of the primary reciprocating pump are eliminated;

by determining the second volumetric difference, effects related to compression and decompression of a dead volume of the secondary reciprocating pump are eliminated;

by determining the second volumetric difference, effects related to a flow of fluid dispensed by the secondary reciprocating pump are eliminated.

9. The method of any one of the above claims, further comprising at least one of:

   determining a compression ratio by dividing the second volumetric difference by the first volumetric difference;
   determining a compression ratio by dividing the second volumetric difference by the first volumetric difference, and determining the value of compressibility of the fluid from the compression ratio;
   determining a compression ratio by dividing the second volumetric difference by the first volumetric difference, and determining the value of compressibility of the fluid from the compression ratio according to the formula: $\kappa$ = (1 - compression ratio) / $P_{SYSTEM}$, with $\kappa$ denoting the compressibility of the fluid, and with $P_{SYSTEM}$ denoting a system pressure of the fluid.

10. The method of any one of claims 3-8, or of claim 9 as depending on claim 3, further comprising:

    the primary reciprocating pump is configured for drawing in fluid at the first value of pressure, and for conveying the fluid to the secondary reciprocating pump;
    the primary reciprocating pump is configured for drawing in fluid at the first value of pressure, for compressing the fluid to the second value of pressure, and for supplying the fluid at the primary reciprocating pump's outlet at the second value of pressure;
    the primary reciprocating pump comprises an inlet valve and an outlet valve;
    the first value of pressure is an atmospheric pressure;
    the second value of pressure is a system pressure;
    the second value of pressure is a system pressure, with the system pressure being several hundreds or even thousands of bar.

11. The method of any one of claims 3-10, further comprising at least one of:

    piston movements of the primary reciprocating pump and the secondary reciprocating pump are coordinated in time;
    the primary reciprocating pump's piston substantially reciprocates out of phase relative to the secondary reciprocating pump's piston;
    a delivery phase of the primary reciprocating pump substantially coincides with an intake phase of the secondary reciprocating pump;
    the value of compressibility of the fluid is determined during regular operation of the system;
    the fluid is a solvent or a solvent composition;
    the primary reciprocating pump and the secondary reciprocating pump are part of a common flow path;
    the primary reciprocating pump is a piston pump, and the secondary reciprocating pump is a piston pump;
    the primary reciprocating pump and the secondary reciprocating pump are fluidically connected in series;
    the primary reciprocating pump and the secondary reciprocating pump form a dual piston serial-type pump;
    the system is a fluid supply system configured for supplying a continuous flow of solvent.

12. A system for determining a compressibility of a fluid, the system comprising
    a fluidic system configured for compressing, starting at a first value of pressure, a first volume of the fluid to a first compressed volume at a second value of pressure, and for compressing, starting at the first value of pressure, a second volume of the fluid to a second compressed volume at the second value of pressure,
    a control unit configured for determining a first volumetric difference corresponding to a difference between the second volume and the first volume, for determining a second volumetric difference corresponding to a difference between the second compressed volume and the first compressed volume, and for determining a value of compressibility of the fluid from a ratio derived from the second volumetric difference and the first volumetric difference.

13. The system of claim 12,
    wherein the fluidic system comprises a fluid chamber and a piston, or
    wherein the fluidic system is a pump system comprising at least one reciprocating pump.

14. The system of claim 12, wherein the fluidic system comprises a primary reciprocating pump fluidically coupled with a secondary reciprocating pump that is located downstream of the primary reciprocating pump, the primary reciprocating pump being configured for conveying the fluid to the secondary reciprocating pump.

15. The system of the preceding claim, wherein the control unit is configured for
    determining the first volumetric difference from a difference between a first piston stroke of the primary reciprocating pump and a second piston stroke of the primary reciprocating pump which is different from the first piston stroke; and for determining the second volumetric difference from a difference between a third piston stroke of the secondary reciprocating pump and a fourth piston stroke of the secondary reciprocating pump, wherein the third piston stroke of the secondary reciprocating pump corresponds to the first piston stroke of the primary reciprocating pump, and wherein the fourth piston stroke of the secondary reciprocating pump corresponds to the second piston stroke of the primary reciprocating pump.

16. A fluid separation system for separating compounds of a sample fluid in a mobile phase, the fluid separation system comprising

a mobile phase drive, preferably a pumping system (800), configured to drive the mobile phase through the fluid separation system, said mobile phase drive comprising a system according to any one of the above claims 12 to 15; a separation unit (807), preferably a chromatographic column, configured for separating compounds of the sample fluid in the mobile phase.

17. The fluid separation system of the preceding claim, further comprising at least one of:

a sample injector configured to introduce the sample fluid into the mobile phase;
a detector configured to detect separated compounds of the sample fluid;
a collection unit configured to collect separated compounds of the sample fluid;
a data processing unit configured to process data received from the fluid separation system;
a degassing apparatus for degassing the mobile phase.

**Patentansprüche**

1. Ein Verfahren zum Bestimmen einer Kompressibilität eines Fluids, welches aufweist
Beginnen bei einem ersten Wert eines Drucks und Komprimieren eines ersten Volumens des Fluids auf ein erstens komprimiertes Volumen bei einem zweiten Wert des Drucks,
Beginnen bei dem ersten Wert des Drucks und Komprimieren eines zweiten Volumens des Fluids auf ein zweites komprimiertes Volumen bei dem zweiten Wert des Drucks,
Bestimmen einer ersten volumetrischen Differenz, welche zu einer Differenz zwischen dem zweiten Volumen und dem ersten Volumen korrespondiert,
Bestimmen einer zweiten volumetrischen Differenz, welche zu einer Differenz zwischen dem zweiten komprimierten Volumen und dem ersten komprimierten Volumen korrespondiert,
Bestimmen eines Werts der Kompressibilität des Fluids aus einem Verhältnis, welches aus der zweiten volumetrischen Differenz und der ersten volumetrischen Differenz abgeleitet wird.

2. Das Verfahren gemäß Anspruch 1,
wobei die Kompressibilität des Fluids in einem fluidischen System bestimmt wird, welches eine Fluidkammer und einen Hubkolben aufweist, oder
wobei die Kompressibilität des Fluids in einem Pumpensystem bestimmt wird, welches zumindest eine Kolbenpumpe aufweist.

3. Das Verfahren gemäß Anspruch 1,
wobei die Kompressibilität des Fluids in einem fluidischen System bestimmt wird, welches eine primäre Kolbenpumpe aufweist, welche fluidisch mit einer sekundären Kolbenpumpe gekoppelt ist, welche stromabwärts der primären Kolbenpumpe lokalisiert ist, wobei die primäre Kolbenpumpe zum Fördern des Fluids an die sekundäre Kolbenpumpe konfiguriert ist.

4. Das Verfahren gemäß dem vorherigen Anspruch, wobei das Verfahren aufweist
Bestimmen der ersten volumetrischen Differenz aus einer Differenz zwischen einem ersten Hubkolbenhub der primären Kolbenpumpe und einem zweiten Hubkolbenhub der primären Kolbenpumpe, welcher unterschiedlich von dem ersten Hubkolbenhub ist,
Bestimmen der zweiten volumetrischen Differenz aus einer Differenz zwischen einem dritten Hubkolbenhub der sekundären Kolbenpumpe und einem vierten Hubkolbenhub der sekundären Kolbenpumpe,
wobei der dritte Hubkolbenhub der sekundären Kolbenpumpe zu dem ersten Hubkolbenhub der primären Kolbenpumpe korrespondiert, und wobei der vierte Hubkolbenhub der sekundären Kolbenpumpe zu dem zweiten Hubkolbenhub der primären Kolbenpumpe korrespondiert.

**5.** Das Verfahren gemäß dem vorherigen Anspruch, welches ferner zumindest eines aufweist von:

der erste Hubkolbenhub der primären Kolbenpumpe ist konfiguriert zum Zuführen von Fluid an die sekundäre Kolbenpumpe und der korrespondierende dritte Hubkolbenhub der sekundären Kolbenpumpe ist konfiguriert zum Ausgeben zumindest eines Anteils des Fluids, welches mittels des ersten Hubkolbenhubs zugeführt worden ist,

der zweite Hubkolbenhub der primären Kolbenpumpe ist konfiguriert zum Zuführen von Fluid an die sekundäre Kolbenpumpe und der korrespondierende vierte Hubkolbenhub der sekundären Kolbenpumpe ist konfiguriert zum Ausgeben zumindest eines Anteils des Fluids, welches mittels des zweiten Hubkolbenhub zugeführt worden ist,

der erste Hubkolbenhub der primären Kolbenpumpe ist konfiguriert zum Zuführen von Fluid an die sekundäre Kolbenpumpe und der korrespondierende dritte Hubkolbenhub der sekundären Kolbenpumpe ist konfiguriert zum Aufnehmen des Fluids, welches mittels des ersten Hubkolbenhubs zugeführt wird, ohne dass etwas Fluid an seinem Auslass ausgegeben wird,

der zweite Hubkolbenhub der primären Kolbenpumpe ist konfiguriert zum Zuführen von Fluid an die sekundäre Kolbenpumpe und der korrespondierende vierte Hubkolbenhub der sekundären Kolbenpumpe ist konfiguriert zum Aufnehmen des Fluids, welches mittels des zweiten Hubkolbenhubs zugeführt wird, ohne dass etwas Fluid an seinem Auslass ausgegeben wird,

der erste Hubkolbenhub der primären Kolbenpumpe ist konfiguriert zum Auffüllen der sekundären Kolbenpumpe während einer Liefern- und Füllen-Phase und der korrespondierende dritte Hubkolbenhub der sekundären Kolbenpumpe ist konfiguriert zum Ausgeben zumindest eines Anteils des Fluids, welches mittels des ersten Hubkolbenhubs zugeführt worden ist,

der zweite Hubkolbenhub der primären Kolbenpumpe ist konfiguriert zum Auffüllen der sekundären Kolbenpumpe während einer Liefern- und Füllen-Phase und der korrespondierende vierte Hubkolbenhub der sekundären Kolbenpumpe ist konfiguriert zum Ausgeben zumindest eines Anteils des Fluids, welches mittels des zweiten Hubkolbenhubs zugeführt worden ist,

der erste Hubkolbenhub der primären Kolbenpumpe ist konfiguriert zum Auffüllen der sekundären Kolbenpumpe während einer Liefern- und Füllen-Phase und der korrespondierende dritte Hubkolbenhub der sekundären Kolbenpumpe ist konfiguriert zum Aufnehmen des Fluids, welches mittels des ersten Hubkolbenhubs zugeführt wird, ohne dass etwas Fluid an seinem Auslass ausgegeben wird,

der zweite Hubkolbenhub der primären Kolbenpumpe ist konfiguriert zum Auffüllen der sekundären Kolbenpumpe während einer Liefern- und Füllen-Phase und der korrespondierende vierte Hubkolbenhub der sekundären Kolbenpumpe ist konfiguriert zum Aufnehmen des Fluids, welches mittels des zweiten Hubkolbenhubs zugeführt wird, ohne dass etwas Fluid an seinem Auslass ausgegeben wird,

der erste Hubkolbenhub der primären Kolbenpumpe und der dritte Hubkolbenhub der sekundären Kolbenpumpe werden während eines ersten Betriebszyklus des Systems ausgeführt,

der zweite Hubkolbenhub der primären Kolbenpumpe und der vierte Hubkolbenhub der sekundären Kolbenpumpe werden während eines weiteren Betriebszyklus des Systems ausgeführt,

zumindest einige Hubpaare eines ersten Hubkolbenhubs der primären Kolbenpumpe und des dritten Hubkolbenhubs der sekundären Kolbenpumpe und Hubpaare eines zweiten Hubkolbenhubs der primären Kolbenpumpe und eines vierten Hubkolbenhubs der sekundären Kolbenpumpe werden kreuzevaluiert, um den Wert der Kompressibilität abzuleiten.

**6.** Das Verfahren gemäß irgendeinem der Ansprüche 4 bis 5, welches ferner zumindest eines aufweist von:

die primäre Kolbenpumpe ist eine Hubkolbenpumpe und der erste Hubkolbenhub und der zweite Hubkolbenhub werden aus Position-gegen-Zeit-Kurven des Hubkolbens der primären Kolbenpumpe abgeleitet,

die sekundäre Kolbenpumpe ist eine Hubkolbenpumpe und der dritte Hubkolbenhub und der vierte Hubkolbenhub werden aus einer Position-gegen-Zeit-Kurven des Hubkolbens der sekundären Kolbenpumpe abgeleitet,

die primäre Kolbenpumpe ist eine Hubkolbenpumpe und der erste Hubkolbenhub und der zweite Hubkolbenhub werden aus Hubkolbenpositionen bei vorgegebenen Zeitpunkten abgeleitet,

die sekundäre Kolbenpumpe ist eine Hubkolbenpumpe und der dritte Hubkolbenhub und der vierte Hubkolbenhub werden aus Hubkolbenpositionen bei vorgegebenen Zeitpunkten abgeleitet,

die primäre Kolbenpumpe ist eine Hubkolbenpumpe und der erste Hubkolbenhub und der zweite Hubkolbenhub werden von Hubkolbenpositionsdaten abgeleitet, welche während eines vorgegebenen Teils eines Pumpzyklus erlangt werden,

die sekundäre Kolbenpumpe ist eine Hubkolbenpumpe und der dritte Hubkolbenhub und der vierte Hubkolbenhub werden aus Hubkolbenpositionsdaten abgeleitet, welche während eines vorgegebenen Teils eines Pumpzyklus erlangt werden,
die primäre Kolbenpumpe ist eine Hubkolbenpumpe und der erste Hubkolbenhub und der zweite Hubkolbenhub werden aus zumindest einem von einer maximalen Hubkolbenposition und einer minimalen Hubkolbenposition während eines vorgegebenen Teils eines Pumpzyklus abgeleitet,
die sekundäre Kolbenpumpe ist eine Hubkolbenpumpe und der dritte Hubkolbenhub und der vierte Hubkolbenhub werden von zumindest einem von einer maximalen Hubkolbenposition und einer minimalen Hubkolbenposition während eines vorgegebenen Teils eines Pumpzyklus abgeleitet.

7.  Das Verfahren gemäß irgendeinem der Ansprüche 3 bis 6, wobei das Fluid, welches mittels der primären Kolbenpumpe zugeführt wird, teilweise zum Auffüllen der sekundären Kolbenpumpe und teilweise zum Aufrechterhalten eines Flusses von Fluid an dem Auslass der sekundären Kolbenpumpe verwendet wird.

8.  Das Verfahren gemäß irgendeinem der Ansprüche 3 bis 7, welches ferner zumindest eines aufweist von:

mittels Bestimmens der ersten volumetrischen Differenz werden Effekte eliminiert, welche sich auf Kompression und Dekompression eines Totvolumens der primären Kolbenpumpe beziehen,
mittels Bestimmen der zweiten volumetrischen Differenz werden Effekte eliminiert, welche sich auf eine Kompression und Dekompression eines Totvolumens der sekundären Kolbenpumpe beziehen,
mittels Bestimmen der zweiten volumetrischen Differenz werden Effekte eliminiert, welche sich auf einen Fluss von Fluid beziehen, welcher mittels der sekundären Kolbenpumpe ausgegeben wird.

9.  Das Verfahren gemäß irgendeinem der oberen Ansprüche, welches ferner zumindest eines aufweist von:

Bestimmen eines Kompressionsverhältnisses mittels Teilens der sekundären volumetrischen Differenz durch die erste volumetrische Differenz,
Bestimmen eines Kompressionsverhältnisses mittels Teilens der zweiten volumetrischen Differenz durch die erste volumetrische Differenz und Bestimmen des Werts der Kompressibilität des Fluids aus dem Kompressionsverhältnis,
Bestimmen eines Kompressionsverhältnisses mittels Teilens der zweiten volumetrischen Differenz durch die erste volumetrische Differenz und Bestimmen des Werts der Kompressibilität des Fluids aus dem Kompressionsverhältnis gemäß der Formel: $\kappa$ = (1 - Kompressionsverhältnis) / $P_{System}$, wobei $\kappa$ die Kompressibilität des Fluids bezeichnet, und wobei $P_{System}$ einen Systemdruck des Fluids bezeichnet.

10. Das Verfahren gemäß irgendeinem der Ansprüche 3 bis 8 oder gemäß Anspruch 9, wenn dieser von Anspruch 3 abhängt, welches ferner aufweist:

die primäre Kolbenpumpe ist konfiguriert zum Einziehen eines Fluids bei dem ersten Wert des Drucks und zum Fördern des Fluids zu der sekundären Kolbenpumpe,
die primäre Kolbenpumpe ist konfiguriert zum Einziehen eines Fluids bei dem ersten Wert des Drucks, zum Komprimieren des Fluids auf den zweiten Wert des Drucks und zum Zuführen des Fluids an den Ausgang der primären Kolbenpumpen bei dem zweiten Wert des Drucks,
die primäre Kolbenpumpe weist ein Einlassventil und ein Auslassventil auf,
der erste Wert des Drucks ist ein atmosphärischer Druck,
der zweite Wert des Drucks ist ein Systemdruck,
der zweite Wert des Drucks ist ein Systemdruck, wobei der Systemdruck mehrere hundert oder sogar tausende von Bar ist.

11. Das Verfahren gemäß irgendeinem der Ansprüche 3 bis 10, welches ferner zumindest eines aufweist von:

Hubkolbenbewegungen der primären Kolbenpumpe und der sekundären Kolbenpumpe sind zeitlich koordiniert,
der Hubkolben der primären Kolbenpumpe bewegt sich im Wesentlichen außer Phase mit Bezug auf den Hubkolben der sekundären Kolbenpumpe hin und her,
eine Lieferphase der primären Kolbenpumpe koinzidiert im Wesentlichen mit einer Einlassphase der sekundären Kolbenpumpe,
der Wert einer Kompressibilität des Fluids wird während regulären Betrieb des Systems bestimmt,
das Fluid ist ein Lösungsmittel oder eine Lösungsmittelzusammensetzung,
die primäre Kolbenpumpe und die sekundäre Kolbenpumpe sind Teil eines gemeinsamen Flusspfads,
die primäre Kolbenpumpe ist eine Hubkolbenpumpe und die sekundäre Kolbenpumpe ist eine Hubkolbenpumpe,

die primäre Kolbenpumpe und die sekundäre Kolbenpumpe sind fluidisch in Reihe verbunden,
die primäre Kolbenpumpe und die sekundäre Kolbenpumpe bilden eine duale Hubkolben-Reihen-Typ-Pumpe,
das System ist ein Fluidbereitstellsystem, welches zum Zuführen eines kontinuierlichen Flusses von Lösungsmittel konfiguriert ist.

12. Ein System zum Bestimmen einer Kompressibilität eines Fluids, wobei das System aufweist
ein fluidisches System, welches konfiguriert ist zum Komprimieren, beginnend bei einem ersten Wert eines Drucks, eines ersten Volumens des Fluids auf ein erstes komprimiertes Volumen bei einem zweiten Wert des Drucks und zum Komprimieren, beginnend bei dem ersten Wert des Drucks, eines zweiten Volumens des Fluids auf ein zweites komprimiertes Volumen bei dem zweiten Wert des Drucks,
eine Steuereinheit, welche konfiguriert ist zum Bestimmen einer ersten volumetrischen Differenz, welche zu einer Differenz zwischen dem zweiten Volumen und dem ersten Volumen korrespondiert, zum Bestimmen einer zweiten volumetrischen Differenz, welche zu einer Differenz zwischen dem zweiten komprimierten Volumen und dem ersten komprimierten Volumen korrespondiert, und zum Bestimmen eines Werts der Kompressibilität des Fluids aus einem Verhältnis, welches aus der zweiten volumetrischen Differenz und der ersten volumetrischen Differenz abgeleitet ist.

13. Das System gemäß Anspruch 12,
wobei das fluidische System eine Fluidkammer und einen Hubkolben aufweist, oder
wobei das fluidische System ein Pumpensystem ist, welches zumindest eine Kolbenpumpe aufweist.

14. Das System gemäß Anspruch 12, wobei das fluidische System eine primäre Kolbenpumpe aufweist, welche fluidisch mit einer sekundären Kolbenpumpe gekoppelt ist, welche stromabwärts der primären Kolbenpumpe lokalisiert ist, wobei die primäre Kolbenpumpe konfiguriert ist zum Fördern des Fluids an die sekundären Kolbenpumpe.

15. Das System gemäß dem vorherigen Anspruch, wobei die Steuereinheit konfiguriert ist
zum Bestimmen der ersten volumetrischen Differenz aus einer Differenz zwischen einem ersten Hubkolbenhub der primären Kolbenpumpe und eines zweiten Hubkolbenhubs der primären Kolbenpumpe, welcher unterschiedlich von dem ersten Hubkolbenhub ist,
und zum Bestimmen der zweiten volumetrischen Differenz aus einer Differenz zwischen einem dritten Hubkolbenhub der sekundären Kolbenpumpe und einem vierten Hubkolbenhub der sekundären Kolbenpumpe,
wobei der dritte Hubkolbenhub der sekundären Kolbenpumpe zu dem ersten Hubkolbenhub der primären Kolbenpumpe korrespondiert, und wobei der vierte Hubkolbenhub der sekundären Kolbenpumpe zu dem zweiten Hubkolbenhub der primären Kolbenpumpe korrespondiert.

16. Ein Fluidseparationssystem zum Separieren von Verbindungen eines Probenfluids in einer mobilen Phase, wobei das Fluidseparationssystem aufweist
einen mobile Phase Antrieb, bevorzugt ein Pumpsystem (800), welcher konfiguriert ist, die mobile Phase durch das Fluidseparationssystem hindurch zu treiben, wobei der mobile Phase Antrieb ein System gemäß irgendeinem der oberen Ansprüche 12 bis 15 aufweist,
eine Separationseinheit (807), bevorzugt eine chromatographische Säule, welche konfiguriert ist zum Separieren von Verbindungen des Probenfluids in der mobilen Phase.

17. Das Fluidseparationssystem gemäß dem vorherigen Anspruch, welches ferner zumindest eines aufweist von:

einen Probeninjektor, welcher konfiguriert ist, das Probenfluid in die mobile Phase einzuführen,
einen Detektor, welcher konfiguriert ist, separierte Verbindungen des Probenfluids zu detektieren,
eine Sammeleinheit, welche konfiguriert ist, separierte Verbindungen des Probenfluids zu sammeln,
eine Datenverarbeitungseinheit, welche konfiguriert ist, Daten zu verarbeiten, welche von dem Fluidseparationssystem empfangen werden,
einen Entgasapparat zum Entgasen der mobilen Phase.

**Revendications**

1. Procédé de détermination de la compressibilité d'un fluide, comprenant le commencement à une première valeur de pression et la compression d'un premier volume du fluide à un premier volume compressé à une deuxième valeur de pression ;
le commencement à la première valeur de pression et la compression d'un deuxième volume du fluide à un deuxième volume compressé à la deuxième valeur de pression ;
la détermination d'une première différence volumétrique correspondant à une différence entre le deuxième volume et le premier volume ;
la détermination d'une deuxième différence volumétrique correspondant à une différence entre le deuxième volume compressé et le premier volume compressé ;
la détermination d'une valeur de compressibilité du fluide à partir d'un rapport dérivé de la deuxième différence volumétrique et de la première différence volumétrique.

**2.** Procédé selon la revendication 1,
dans lequel la compressibilité du fluide est déterminée dans un système fluidique comprenant une chambre de fluide et un piston, ou
dans lequel la compressibilité du fluide est déterminée dans un système de pompe comprenant au moins une pompe alternative.

**3.** Procédé selon la revendication 1,
dans lequel la compressibilité du fluide est déterminée dans un système fluidique comprenant une pompe alternative primaire couplée de manière fluidique à une pompe alternative secondaire qui est située en aval de la pompe alternative primaire, la pompe alternative primaire étant configurée pour transporter le fluide vers la pompe alternative secondaire.

**4.** Procédé selon la revendication précédente, le procédé comprenant
la détermination de la première différence volumétrique à partir d'une différence entre une première course de piston de la pompe alternative primaire et une deuxième course de piston de la pompe alternative primaire qui est différente de la première course de piston ;
la détermination de la deuxième différence volumétrique à partir d'une différence entre une troisième course de piston de la pompe alternative secondaire et une quatrième course de piston de la pompe alternative secondaire ;
dans lequel la troisième course de piston de la pompe alternative secondaire correspond à la première course de piston de la pompe alternative primaire, et dans lequel la quatrième course de piston de la pompe alternative secondaire correspond à la deuxième course de piston de la pompe alternative primaire.

**5.** Procédé selon la revendication précédente, comprenant en outre au moins l'une de :

la première course de piston de la pompe alternative primaire est configurée pour fournir du fluide à la pompe alternative secondaire, et la troisième course de piston correspondante de la pompe alternative secondaire est configurée pour distribuer au moins une portion du fluide qui a été fourni par la première course de piston ;
la deuxième course de piston de la pompe alternative primaire est configurée pour fournir du fluide à la pompe alternative secondaire, et la quatrième course de piston correspondante de la pompe alternative secondaire est configurée pour distribuer au moins une portion du fluide qui a été fourni par la deuxième course de piston ;
la première course de piston de la pompe alternative primaire est configurée pour fournir du fluide à la pompe alternative secondaire, et la troisième course de piston correspondante de la pompe alternative secondaire est configurée pour recevoir le fluide fourni par la première course de piston sans distribuer de fluide à sa sortie ;
la deuxième course de piston de la pompe alternative primaire est configurée pour fournir du fluide à la pompe alternative secondaire, et la quatrième course de piston correspondante de la pompe alternative secondaire est configurée pour recevoir le fluide fourni par la première course de piston sans distribuer de fluide à sa sortie ;
la première course de piston de la pompe alternative primaire est configurée pour remplir la pompe alternative secondaire au cours d'une phase de livraison et de remplissage, et la troisième course de piston correspondante de la pompe alternative secondaire est configurée pour distribuer au moins une portion du fluide qui a été fourni par la première course de piston ;
la deuxième course de piston de la pompe alternative primaire est configurée pour remplir la pompe alternative secondaire au cours d'une phase de livraison et de remplissage, et la quatrième course de piston correspondante de la pompe alternative secondaire est configurée pour distribuer au moins une portion du fluide qui a été fourni par la deuxième course de piston ;
la première course de piston de la pompe alternative primaire est configurée pour remplir la pompe alternative secondaire au cours d'une phase de livraison et de remplissage, et la troisième course de piston correspondante de la pompe alternative secondaire est configurée pour recevoir le fluide fourni par la première course de piston sans distribuer de fluide à sa sortie ;
la deuxième course de piston de la pompe alternative primaire est configurée pour remplir la pompe alternative secondaire au cours d'une phase de livraison et de remplissage, et la quatrième course de piston correspondante de la pompe alternative secondaire est configurée pour recevoir le fluide fourni par la deuxième course de piston sans distribuer de fluide à sa sortie ;

la première course de piston de la pompe alternative primaire et la troisième course de piston de la pompe alternative secondaire sont effectuées au cours d'un premier cycle de fonctionnement du système ;

la deuxième course de piston de la pompe alternative primaire et la quatrième course de piston de la pompe alternative secondaire sont effectuées au cours d'un autre cycle de fonctionnement du système ;

au moins certaines des paires de courses d'une première course de piston de la pompe alternative primaire et de la troisième course de piston de la pompe alternative secondaire et des paires de courses d'une deuxième course de piston de la pompe alternative primaire et d'une quatrième course de piston de la pompe alternative secondaire sont évaluées par évaluation croisée pour dériver la valeur de compressibilité.

6. Procédé selon l'une quelconque des revendications 4 et 5, comprenant en outre au moins l'un de :

la pompe alternative primaire est une pompe à piston, et la première course de piston et la deuxième course de piston sont dérivées de courbes de position dans le temps du piston de la pompe alternative primaire ;

la pompe alternative secondaire est une pompe à piston, et la troisième course de piston et la quatrième course de piston sont dérivées de courbes de position dans le temps du piston de la pompe alternative secondaire ;

la pompe alternative primaire est une pompe à piston, et la première course de piston et la deuxième course de piston sont dérivées de positions de piston à des points prédéterminés dans le temps ;

la pompe alternative secondaire est une pompe à piston, et la troisième course de piston et la quatrième course de piston sont dérivées de positions de piston à des points prédéterminés dans le temps ;

la pompe alternative primaire est une pompe à piston, et la première course de piston et la deuxième course de piston sont dérivées de données de position de piston acquises au cours d'une partie prédéterminée d'un cycle de pompe ;

la pompe alternative secondaire est une pompe à piston, et la troisième course de piston et la quatrième course de piston sont dérivées de données de position de piston acquises au cours d'une partie prédéterminée d'un cycle de pompe ;

la pompe alternative primaire est une pompe à piston, et la première course de piston et la deuxième course de piston sont dérivées d'au moins d'une position de piston maximum et d'une position de piston minimum au cours d'une partie prédéterminée d'un cycle de pompe ;

la pompe alternative secondaire est une pompe à piston, et la troisième course de piston et la quatrième course de piston sont dérivées d'au moins d'une position de piston maximum et d'une position de piston minimum au cours d'une partie prédéterminée d'un cycle de pompe.

7. Procédé selon l'une quelconque des revendications 3 à 6, dans lequel le fluide fourni par la pompe alternative primaire est partiellement utilisé pour remplir la pompe alternative secondaire et partiellement utilisé pour maintenir un flux de fluide à la sortie de la pompe alternative secondaire.

8. Procédé selon l'une quelconque des revendications 3 à 7, comprenant en outre au moins l'un de :

en déterminant la première différence volumétrique, des effets associés à la compression et à la décompression d'un volume inerte de la pompe alternative primaire sont éliminés ;

en déterminant la deuxième différence volumétrique, des effets associés à la compression et à la décompression d'un volume inerte de la pompe alternative primaire sont éliminés ;

en déterminant la deuxième différence volumétrique, des effets associés à un flux de fluide distribué par la pompe alternative secondaire sont éliminés.

9. Procédé selon l'une quelconque des revendications précédentes, comprenant en outre au moins l'une de :

la détermination d'un taux de compression en divisant la deuxième différence volumétrique par la première différence volumétrique ;

la détermination d'un taux de compression en divisant la deuxième différence volumétrique par la première différence volumétrique, et la détermination de la valeur de la compressibilité du fluide à partir du taux de compression ;

la détermination d'un taux de compression en divisant la deuxième différence volumétrique par la première différence volumétrique, et la détermination de la valeur de la compressibilité du fluide à partir du taux de compression selon la formule : $\kappa$ = (1 - taux de compression) / $P_{SYSTEM}$, où $\kappa$ indique la compressibilité du fluide, et $P_{SYSTEM}$ indique une pression de système du fluide.

**10.** Procédé selon l'une quelconque des revendications 3 à 8, ou selon la revendication 9 dépendant de la revendication 3, comprenant en outre :

la pompe alternative primaire est configurée pour tirer du fluide à la première valeur de pression, et pour transporter le fluide vers la pompe alternative secondaire ;
la pompe alternative primaire est configurée pour tirer du fluide à la première valeur de pression, pour compresser le fluide à la deuxième valeur de pression, et pour fournir le fluide à la sortie de la pompe alternative primaire à la deuxième valeur de pression ;
la pompe alternative primaire comprend une soupape d'entrée et une soupape de sortie ;
la première valeur de pression est une pression atmosphérique ;
la deuxième valeur de pression est une pression de système ;
la deuxième valeur de pression est une pression de système, la pression de système étant de plusieurs centaines ou de plusieurs milliers de bars.

**11.** Procédé selon l'une quelconque des revendications 3 à 10, comprenant en outre au moins l'un de :

les mouvements de piston de la pompe alternative primaire et de la pompe alternative secondaire sont coordonnés dans le temps ;
le piston de la pompe alternative primaire se déplace sensiblement en va-et-vient de manière déphasée par rapport au piston de la pompe alternative secondaire ;
une phase de livraison de la pompe alternative primaire coïncide sensiblement avec une phase d'admission de la pompe alternative secondaire ;
la valeur de compressibilité du fluide est déterminée au cours du fonctionnement régulier du système ;
le fluide est un solvant ou une composition de solvant ;
la pompe alternative primaire et la pompe alternative secondaire font partie d'un chemin d'écoulement commun ;
la pompe alternative primaire est une pompe à piston et la pompe alternative secondaire est une pompe à piston ;
la pompe alternative primaire et la pompe alternative secondaire sont reliées de manière fluidique en série ;
la pompe alternative primaire et la pompe alternative secondaire constituent une pompe à deux pistons de type en série ;
le système est un système d'alimentation de fluide configuré pour alimenter un flux continu de solvant.

**12.** Système de détermination d'une compressibilité d'un fluide, le système comprenant
un système fluidique configuré pour compresser, en commençant à une première valeur de pression, un premier volume du fluide en un premier volume compressé à une deuxième valeur de pression, et pour compresser, en commençant à la première valeur de pression, un deuxième volume du fluide en un deuxième volume compressé à la deuxième valeur de pression,
une unité de commande configurée pour effectuer la détermination d'une première différence volumétrique correspondant à une différence entre le deuxième volume et le premier volume, la détermination d'une deuxième différence volumétrique correspondant à une différence entre le deuxième volume compressé et le premier volume compressé, et la détermination d'une valeur de compressibilité du fluide à partir d'un rapport dérivé de la deuxième différence volumétrique et de la première différence volumétrique.

**13.** Système selon la revendication 12,
dans lequel le système fluidique comprend une chambre de fluide et un piston, ou
dans lequel le système fluidique est un système de pompe comprenant au moins une pompe alternative.

**14.** Système selon la revendication 12, dans lequel le système fluidique comprend une pompe alternative primaire couplée de manière fluidique à une pompe alternative secondaire qui est située en aval de la pompe alternative primaire, la pompe alternative primaire étant configurée pour transporter le fluide vers la pompe alternative secondaire.

**15.** Système selon la revendication précédente, dans lequel l'unité de commande est configurée pour effectuer
la détermination de la première différence volumétrique à partir d'une différence entre une première course de piston de la pompe alternative primaire et une deuxième course de piston de la pompe alternative primaire qui est différente de la première course de piston ;
et la détermination de la deuxième différence volumétrique à partir d'une différence entre une troisième course de piston de la pompe alternative secondaire et une quatrième course de piston de la pompe alternative secondaire ;
dans lequel la troisième course de piston de la pompe alternative secondaire correspond à la première course de piston de la pompe alternative primaire, et dans lequel la quatrième course de piston de la pompe alternative secondaire correspond à la deuxième course de piston de la pompe alternative primaire.

16. Système de séparation de fluide pour séparer des composés d'un fluide d'échantillon dans une phase mobile, le système de séparation de fluide comprenant

un entraînement de phase mobile, de préférence un système de pompage (800), configuré pour entraîner la phase mobile à travers le système de séparation de fluide, ledit entraînement de phase mobile comprenant un système selon l'une quelconque des revendications 12 à 15 ;

une unité de séparation (807), de préférence une colonne chromatographique, configurée pour séparer des composés du fluide d'échantillon dans la phase mobile.

17. Système de séparation de fluide selon la revendication précédente, comprenant en outre au moins l'un de :

un injecteur d'échantillon configuré pour introduire le fluide d'échantillon dans la phase mobile ;

un détecteur configuré pour détecter des composés séparés du fluide d'échantillon ;

une unité de collecte configurée pour collecter des composés séparés du fluide d'échantillon ;

une unité de traitement de données configurée pour traiter des données reçues du système de séparation de fluide ;

un appareil de dégazage pour dégazer la phase mobile.

Fig.1

Fig.2A

Fig.2B

Fig.2C

Fig.2D

EP 2 430 309 B1

Fig. 3

Fig. 4A

Fig. 4B

V1$_{DEC}$

V1$_{COM}$

ΔD1

D1$_{DEC}$

D1$_{COM}$

D1$_{COM}$

ΔD1

D1$_{DEC}$

Fig.5A    Fig.5B    Fig.5C    Fig.5D

V2$_{COM}$

D2$_{COM}$

D2$_{COM}$

Fig.6A    Fig.6B

Fig. 7A

Fig. 7B

$l_{LONG,DEC}$ :

Fig. 8A

$l_{SHORT,DEC}$ :

Fig. 8B

Δ DECOMPRESSED :

Fig. 8C

$l_{LONG,COM}$:

$$\boxed{L1_{COM}} \quad - \quad F \cdot T$$

Fig. 9A

$l_{SHORT,COM}$:

$$\boxed{S1_{COM}} \quad - \quad F \cdot T$$

Fig. 9B

Δ COMPRESSED:

$$\boxed{L1_{COM}} \quad - \quad F \cdot T \quad - \quad \boxed{S1_{COM}} \quad + \quad F \cdot T \quad =$$

$$= \quad \boxed{L1_{COM}} \quad - \quad \boxed{S1_{COM}}$$

Fig. 9C

Fig. 10A

Fig. 11

Fig. 10B

Fig. 12A

Fig. 12B

Fig. 13A

Fig. 13B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4797207 A